# EUROPÄISCHE PATENTSCHRIFT

(11) **EP 3 473 422 B1**
(45) Veröffentlichungstag und Bekanntmachung des Hinweises auf die Patenterteilung: **09.11.2022**
(21) Anmeldenummer: 17197698.8
(22) Anmeldetag: 23.10.2017
(51) Int. Cl.: B30B 9/32, B30B 15/08, B23Q 11/08, E06B 3/48

(54) **KOMPAKTORANORDNUNG UND VERFAHREN ZUM MONTIEREN UND WARTEN EINER KOMPAKTORANORDNUNG**
COMPACTOR ASSEMBLY AND METHOD FOR MOUNTING AND MAINTAINING A COMPACTOR ASSEMBLY
SYSTÈME COMPACTEUR ET PROCÉDÉ DE MONTAGE ET DE MAINTIEN D'UN SYSTÈME COMPACTEUR

(43) Veröffentlichungstag der Anmeldung: 24.04.2019
(73) Patentinhaber: Wincor Nixdorf International GmbH, 33106 Paderborn (DE)
(72) Erfinder: HARTUNG, Domenic, 99094 Molsdorf (DE)
(74) Vertreter: Viering, Jentschura & Partner mbB Patent- und Rechtsanwälte

(56) Entgegenhaltungen:
- CH-A5- 679 472
- US-A- 2 848 940
- US-A- 3 754 503
- US-A- 4 512 252
- US-A- 5 058 957

## Beschreibung

Die Erfindung betrifft eine Kompaktoranordnung gemäß Anspruch 1, eine Kompaktoreinrichtung gemäß Anspruch 11, ein Verfahren gemäß Anspruch 12 zum Montieren einer Kompaktoranordnung und ein Verfahren gemäß Anspruch 13 zum Warten einer Kompaktoranordnung. Weitere Ausgestaltungen der Erfindung ergeben sich aus den jeweiligen abhängigen Ansprüchen.

Im Allgemeinen werden zum Kompaktieren von Objekten verschiedene Konzepte verwendet, wobei die Objekte zerteilt, gepresst, und/oder auf eine andere Art umgeformt werden, um deren Platzbedarf zu verringern. Aufgrund des eingeführten Pfandsystems für Einweg- und Mehrwegbehälter (z.B. Flaschen, Dosen, Gläser, etc.) werden zunehmend automatisierte Rücknahmesysteme verwendet, um die Rücknahme großer Mengen an Behältern logistisch einfach zu gestalten. Mittels derartiger Rücknahmesysteme können die Behälter beispielsweise nach Art, Material, etc., sortieren werden. Ferner können verschiedene Optionen für die Rücknahme von Einzelbehältern oder Gebinden (z.B. einem Kasten, etc.) vorgesehen sein. In der Regel kann es erforderlich oder hilfreich sein, zumindest einige der zurückgenommenen Behälter zu zerkleinern, um einen effizienten Abtransport dieser zu ermöglichen. Dabei können beispielsweise nicht nur Einweg-Kunststoffbehälter, sondern auch Einweg-Glasbehälter, etc., kompaktiert werden. Mehrwegbehälter und Mehrweggebinde werden in der Regel separat gesammelt und abtransportiert ohne diese zu kompaktieren. In der Lebensmittelindustrie werden die leeren Behälter auch als Leergut bezeichnet und das Rücknahmesystem als Leergutrücknahmeanlage oder Leergutrücknahmeautomat.

US 2 848 940 A beschreibt eine Ballen-Presse für Papier, Stoffe, Stroh, Torf und dergleichen, gemäss dem Oberbegriff des Anspruchs 1.

In der Ballen-Presse wird ein Container, welcher die Form eines Parallelepipedes aufweist, von oben mit Material gefüllt und ein Press-Kolben komprimiert das Material vertikal zu einem Ballen. Der Container weist dabei Seiten auf, welche derart schnell vom Ballen weggeschwenkt werden können, dass die Seiten das Pack-Prozedere nicht behindern.

Verschiedenen Ausführungsformen betreffen eine Kompaktoranordnung, beispielsweise in Verwendung in einer Leergutrücknahmeanlage oder einem Leergutrücknahmeautomaten. Gemäß verschiedenen Ausführungsformen kann die Kompaktoranordnung mindestens eine Klappenanordnung (auch als Abdeckplattenanordnung bezeichnet) aufweisen. Dabei kann die Klappenanordnung beispielsweise Folgendes aufweisen: eine erste Abdeckplatte; eine zweite Abdeckplatte; eine erste Scharnieranordnung mittels derer die erste Abdeckplatte schwenkbar an einem Tragegestell der Kompaktoranordnung montiert ist und mittels derer die zweite Abdeckplatte schwenkbar an dem Tragegestell montiert ist; eine dritte Abdeckplatte; und eine zweite Scharnieranordnung mittels derer die dritte Abdeckplatte schwenkbar an der zweiten Abdeckplatte montiert ist, wobei die Klappenanordnung derart eingerichtet ist, dass diese in eine Geschlossen-Stellung, in eine erste Offen-Stellung und in eine zweite Offen-Stellung gebracht werden kann mittels Schwenkens der ersten Abdeckplatte, der zweiten Abdeckplatte und/oder der dritten Abdeckplatte, wobei, in der ersten Offen-Stellung, die erste Abdeckplatte über der zweiten Abdeckplatte angeordnet ist, sowie die zweite und die dritte Abdeckplatte im Wesentlichen in einer gemeinsamen Ebene ausgerichtet sind; und/oder wobei, in der zweiten Offen-Stellung, die drei Abdeckplatten übereinander angeordnet sind. An dem Tragegestell kann beispielsweise mindestens ein Kompaktor montiert sein oder werden.

Ein Montieren der Kompaktoranordnung kann beispielsweise Folgendes aufweisen: Aufstellen eines Tragegestells auf einen Untergrund, wobei die Klappenanordnung, wie vorangehend beschrieben ist, in einer ersten Stellung ist; Anheben des Tragegestells und Abstützen des Tragegestells auf einer vordefinierten Höhe; und Klappen der Klappenanordnung in eine zweite Stellung, welche verschieden von der ersten Stellung ist.

Ein Warten (z.B. im Falle einer Reparatur, einer Reinigung, etc.) einer Kompaktoranordnung kann beispielsweise Folgendes aufweisen: Betreiben der Kompaktoranordnung, wobei die Klappenanordnung in einer ersten Stellung ist; anschließend, Unterbrechen des Betriebs der Kompaktoranordnung; Klappen der Klappenanordnung in eine zweite Stellung zum Warten der Kompaktoranordnung und/oder Klappen der Klappenanordnung in eine dritte Stellung zum Austauschen eines unterhalb des Tragegestells angeordneten Sammelbehälters; und, anschließend, Klappen der Klappenanordnung in die erste Stellung und Wiederaufnehmen des Betriebs der Kompaktoranordnung.

Ausführungsbeispiele sind in den Figuren dargestellt und werden im Folgenden näher erläutert.

Es zeigen
Fig.1A und Fig.1B einen Kompaktor in verschiedenen schematischen Darstellungen, gemäß verschiedenen Ausführungsformen;
Fig.2A und Fig.2B eine Kompaktoranordnung in verschiedenen schematischen Darstellungen, gemäß verschiedenen Ausführungsformen;
Fig.3A und Fig.3B jeweils eine Kompaktoreinrichtung in einer schematischen Darstellung, gemäß verschiedenen Ausführungsformen;
Fig.4A bis Fig.4F jeweils verschiedene Komponenten einer Kompaktoreinrichtung in einer schematischen Darstellung, gemäß verschiedenen Ausführungsformen;
Fig.5A bis Fig.5C jeweils mehrere Kompaktoranordnungen in verschiedenen schematischen Darstellungen, gemäß verschiedenen Ausführungsformen;
Fig.6 eine Kompaktoranordnung in einer schematischen Darstellung, gemäß verschiedenen Ausführungsformen;
Fig.7A bis Fig.7C eine Kompaktoranordnung in verschiedenen schematischen Darstellungen, gemäß verschiedenen Ausführungsformen;
Fig.8A bis Fig.8C mehrere Kompaktoranordnungen in verschiedenen schematischen Darstellungen, gemäß verschiedenen Ausführungsformen;
Fig.9A bis Fig.9C mehrere Kompaktoranordnungen in verschiedenen schematischen Darstellungen, gemäß verschiedenen Ausführungsformen;
Fig.10A und Fig.10B jeweils eine Scharnieranordnung einer Klappenanordnung in einer schematischen Darstellung, gemäß verschiedenen Ausführungsformen;
Fig.11 ein schematisches Ablaufdiagramm eines Verfahrens zum Montieren der Kompaktoranordnung, gemäß verschiedenen Ausführungsformen; und
Fig.12 ein schematisches Ablaufdiagramm eines Verfahrens zum Warten der Kompaktoranordnung, gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen", "gekoppelt" sowie "gekuppelt" verwendet zum Beschreiben sowohl einer direkten als auch einer indirekten Verbindung, eines direkten oder indirekten Anschlusses, einer direkten oder indirekten Kopplung sowie einer direkten oder indirekten Kupplung. In den Figuren werden identische oder ähnliche Elemente mit identischen Bezugszeichen versehen, soweit dies zweckmäßig ist.

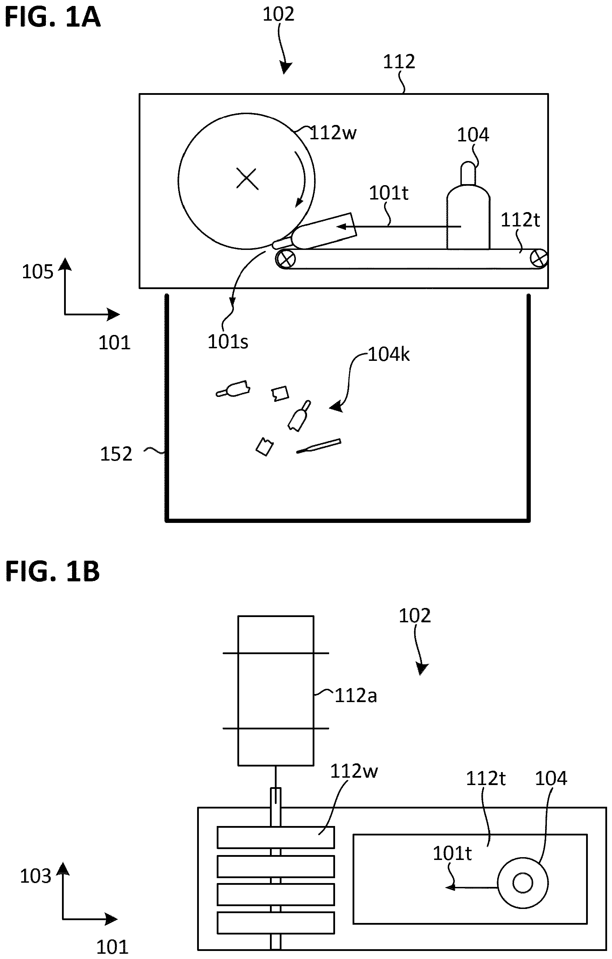

**Fig.1A** und **Fig.1B** veranschaulichen einen Kompaktor 102 gemäß verschiedenen Ausführungsformen in einer Seiten- oder Querschnittsansicht und in einer Draufsicht.

Ein Kompaktor 102 kann als funktionelle Baugruppe eines Leergutautomaten verwendet werden. Ein Leergutautomat wird auch als Leergutrücknahmeautomat (engl.: Reverse Vending Machine, RVS) bezeichnet. Typischerweise steht der Leergutautomat in Verbindung mit einem Pfandsystem, kann aber auch in anderen Einsatzgebieten Anwendung finden.

Um beispielsweise den Abtransport zurückgenommenen Leerguts 104 zu erleichtern, kann ein Kompaktor 102 eingerichtet sein, dieses Leergut 104 zu kompaktieren. Beispielsweise kann das Leergut 104, welches einem Leergutautomaten zugeführt wird, z.B. sofern es zum Kompaktieren geeignet ist, mittels eines Kompaktors 102 oder aufgeteilt mittels mehrerer Kompaktoren 102 kompaktiert werden. Anschaulich wird dabei der Platzbedarf des Leerguts 104 verringert. Dazu kann das Leergut 104 umgeformt, z.B. gepresst, zerkleinert, etc., werden. Anschaulich kann das Leergut 104 beispielsweise in eine Vielzahl von Stücke zerbrochen, zerschnitten, etc. werden. Alternativ oder zusätzlich dazu kann das Leergut 104 beispielsweise in eine flache Form gedrückt werden. Beispielsweise können Glasbehälter zerbrochen werden, z.B. mittels eines Glas-Crushers. Kunststoffbehälter können beispielsweise mittels eines Schneidwerks zerkleinert werden. Ferner können andere Umformverfahren Anwendung finden.

Kompaktiertes Leergut 104k kann in mindestens einem Sammelbehälter 152 (z.B. einem Frachtbehälter) gesammelt 101s werden. Der Sammelbehälter 152 kann dazu beispielsweise unter dem Kompaktor 102 angeordnet sein oder werden. Beispielsweise kann der Kompaktor 102 auf einem Gestell angeordnet sein, so dass unterhalb des Kompaktors 102 ein Raum zum Aufnehmen eines Sammelbehälters 152 oder mehrerer Sammelbehälter 152 bereitgestellt ist.

Leergut 104 kann in dem Zusammenhang beispielsweise als Behälter verstanden werden, z.B. in Form entleerter Verkaufsverpackungen, Verkaufsbehältern etc. Leergut 104 kann beispielsweise Folgendes aufweisen: Einwegflaschen, Einwegpfandflaschen, Getränkedosen, Mehrwegflaschen, etc. Ein Leergutautomat kann beispielsweise Teil einer Leergut-Rückführungskette sein, welche das Leergut 104 beispielsweise einer Wiederverwendung oder einer Verwertung (z.B. zur Rohstoff-Rückgewinnung) zuführt.

Der Kompaktor 102 kann ein Kompaktorwerk 112 (anschaulich eine Vorrichtung zum Verringern des Platzbedarfs) aufweisen, mittels dessen Leergut 104 kompaktiert werden kann. Das Kompaktorwerk 112 kann zumindest eine Kompaktorwalze 112w (z.B. eine Einzel-Kompaktorwalze oder mehrere gegenläufige Kompaktorwalzen) und einen Antrieb 112a (z.B. einen elektrischen Motor) zum Antreiben der Kompaktorwalze 112w aufweisen. Ferner kann der Kompaktor 102 eine Zuführvorrichtung 112t aufweisen zum Zuführen des Leerguts 104 in Richtung 101t der Kompaktorwalze 112w.

Die Zuführvorrichtung 112t kann beispielsweise eine angetriebene Transportvorrichtung sein. Alternativ oder zusätzlich dazu kann die Zuführvorrichtung 112t einen vordefinierten Pfad bereitstellen, auf dem das Leergut 104 beispielsweise aufgrund der Gravitationskraft bewegt wird. Anschaulich kann die Zuführvorrichtung 112t in diesem Fall eine Rutsche aufweisen. Alternativ dazu kann der Kompaktor 102 derart eingerichtet sein, dass das Leergut 104 in diesen hineinfallen kann, z.B. in freiem Fall.

Die Zuführvorrichtung 112t kann beispielsweise, als angetriebene Transportvorrichtung, einen Bandförderer, einen Gurtgliedförderer, einen Kettenförderer, einen Rollenförderer, etc. aufweisen. Ein Bandförderer kann beispielsweise mindestens ein Transportband aufweisen, auf welchem das Leergut 104 transportiert wird. Das mindestens eine Transportband kann beispielsweise mittels mehrerer Transportrollen (auch als Tragrollen bezeichnet) abgestützt sein oder werden. Das mindestens eine Transportband kann endlos umlaufend gelagert sein. Ein Gurtgliedförderer kann mindestens ein Gurtgliedband aufweisen. Das mindestens eine Gurtgliedband kann endlos umlaufend gelagert sein. Die einzelnen Gurtglieder eines Gurtgliedbands können mittels Verbindungselementen lösbar verbunden sein. Ein Rollenförderer kann beispielsweise eine Vielzahl von Transportrollen aufweisen, welche derart angeordnet sind, dass diese eine Transportfläche bereitstellen, auf welcher das Leergut 104 transportiert werden kann. Es können alternativ oder zusätzlich noch andere Förderertypen verwendet werden, welche zum Transport des Leerguts 104 geeignet sind.

Die Zuführvorrichtung 112t kann beispielsweise ein Schaufelrad aufweisen. Das Schaufelrad kann beispielsweise das Zuführen und/oder das Kompaktieren des Leerguts 104 unterstützen.

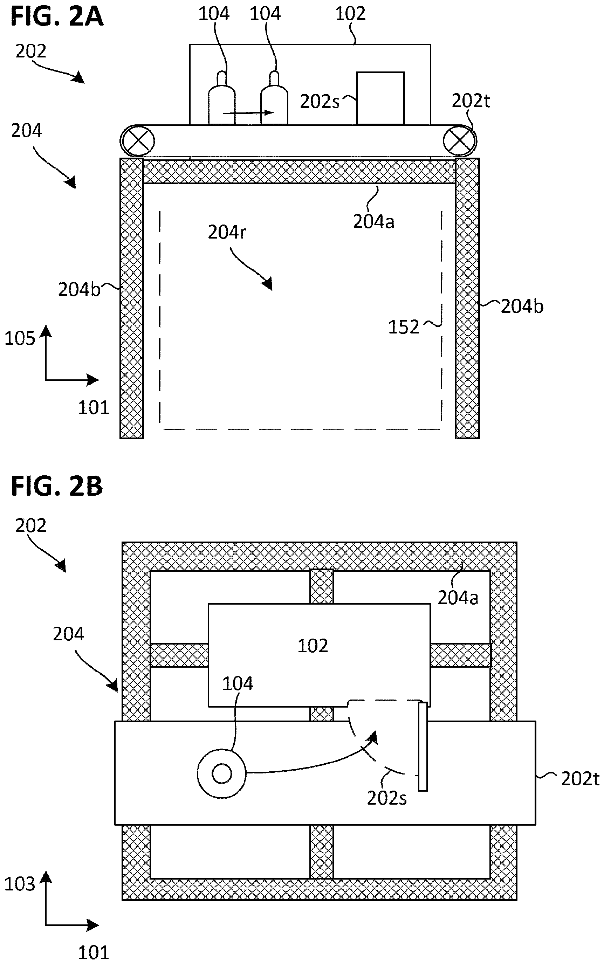

**Fig.2A** und **Fig.2B** veranschaulichen eine Kompaktoranordnung 202 gemäß verschiedenen Ausführungsformen in verschiedenen Ansichten. Die Kompaktoranordnung 202 kann beispielsweise eine Gestellanordnung 204 aufweisen. Ferner kann die Kompaktoranordnung 202 einen Kompaktor 102 oder mehrere Kompaktoren 102 aufweisen. Der Kompaktor 102 der Kompaktoranordnung 202 kann beispielsweise in ähnlicher oder gleicher Weise eingerichtet sein, wie vorangehend beschrieben ist und vice versa.

Die Kompaktoranordnung 202 kann zusätzlich zu dem Kompaktor 102 weitere Baugruppen aufweisen. Die weiteren Baugruppen können beispielsweise eingerichtet sein, den Betrieb des Kompaktors 102 zu unterstützen und/oder den Kompaktor 102 in die Ablaufkette eines Leergutautomaten einzubinden.

Die Gestellanordnung 204 kann beispielsweise mindestens ein Tragegestell 204a aufweisen. Der Kompaktor 102 kann beispielsweise an dem mindestens einen Tragegestell 204a befestig sein oder werden. Beispielsweise kann die Gestellanordnung 204 den Kompaktor 102 in einer Arbeitshöhe abstützen. Somit kann beispielsweise ein Sammelbehälter 152 (z.B. ein Container oder ein anderer Großraum-Behälter) unter dem Kompaktor 102 angeordnet sein oder werden.

Die Gestellanordnung 204 kann ferner mehrere Stützbeine 204b aufweisen. Die Stützbeine 204b können derart angeordnet sein, dass zwischen diesen ein erster Aufnahmeraum 204r zum Aufnehmen eines Sammelbehälters 152 bereitgestellt ist. Somit kann beispielsweise der Sammelbehälter 152 auf einfache Weise ausgetauscht werden kann.

Die Kompaktoranordnung 202 kann beispielsweise eine Leergut-Transportvorrichtung 202t aufweisen. Die Leergut-Transportvorrichtung 202t kann beispielsweise eingerichtet sein, das Leergut 104 zu dem Kompaktor 102 und/oder an diesem vorbei zu führen. Die Leergut-Transportvorrichtung 202t kann beispielsweise Teil einer Transportstrecke sein, entlang derer das Leergut 104 transportiert wird. Die Leergut-Transportvorrichtung 202t kann beispielsweise eine angetriebene Transportvorrichtung sein, beispielsweise aufweisend mindestens einen Bandförderer, mindestens einen Gurtgliedförderer, mindestens einen Kettenförderer, mindestens einen Rollenförderer, etc.

Die Kompaktoranordnung 202 kann beispielsweise eine Selektiervorrichtung 202s aufweisen. Die Selektiervorrichtung 202s kann auch als Sortiervorrichtung oder Teil einer Sortiervorrichtung verstanden werden. Somit kann Leergut 104, dass entlang des Kompaktors 102 geführt wird, selektiert werden, z.B. zum selektiven Zuführen des Leerguts 104 in den Kompaktor 102. Dabei kann das Leergut 104 beispielsweise klassifiziert sein oder werden, z.B. kann eine erste Klasse "Kompaktieren" und eine zweite Klasse "Nicht-Kompaktieren" sein. Ferner können zusätzliche oder andere Klassen verwendet werden, z.B. kann das Leergut 104 nach Farbe, Material (z.B. Glas, Metall, Kunststoff, etc.), Zustand (z.B. Füllzustand, Integrität), etc. klassifiziert sein oder werden. Eine Kompaktoranordnung 202 kann beispielsweise Leergut 104, welches eine ihr zugeordnete Klasse aufweist (z.B. "Kompaktieren", z.B. "Glas einer ersten Farbe", "Glas einer zweiten Farbe", "Kunststoff einer ersten Farbe", "Kunststoff einer zweiten Farbe", etc.), selektieren.

Die Selektiervorrichtung 202s kann beispielsweise eingerichtet sein, aus einem Leergutstrom, welcher mittels der Leergut-Transportvorrichtung 202t an dem Kompaktor 102 entlanggeführt wird, das Leergut 104, welches eine der Kompaktoranordnung 202 zugeordnete Klasse aufweist, herauszuteilen und dem Kompaktor 102 zuzuführen.

Die Selektiervorrichtung 202s kann beispielsweise eingerichtet sein, das Klassifizieren des Leerguts 104 durchzuführen. Beispielsweise kann das Leergut 104 mittels der Selektiervorrichtung 202s und/oder einer geeigneten Sensoranordnung, die mit der Selektiervorrichtung 202s gekoppelt ist, klassifiziert werden, z.B. nach "kompaktierbar", "nicht-kompaktierbar", Behältertyp, Rückführungstyp, Material, Farbe, etc. Beispielsweise kann das Selektieren des Leerguts 104 stufenweise erfolgen, z.B. kann als "kompaktierbar" klassifiziertes Leergut 104 weiter nach Farbe, Material, etc. unterklassifiziert werden.

Das Klassifizieren des Leerguts 104 bzw. ein Detektieren der Klasse des Leerguts 104 kann alternativ oder zusätzlich mittels einer separaten Klassifiziereinrichtung erfolgen. Diese kann beispielsweise am Eingang eines Leergutautomaten (siehe die nachfolgenden Figuren) angeordnet sein.

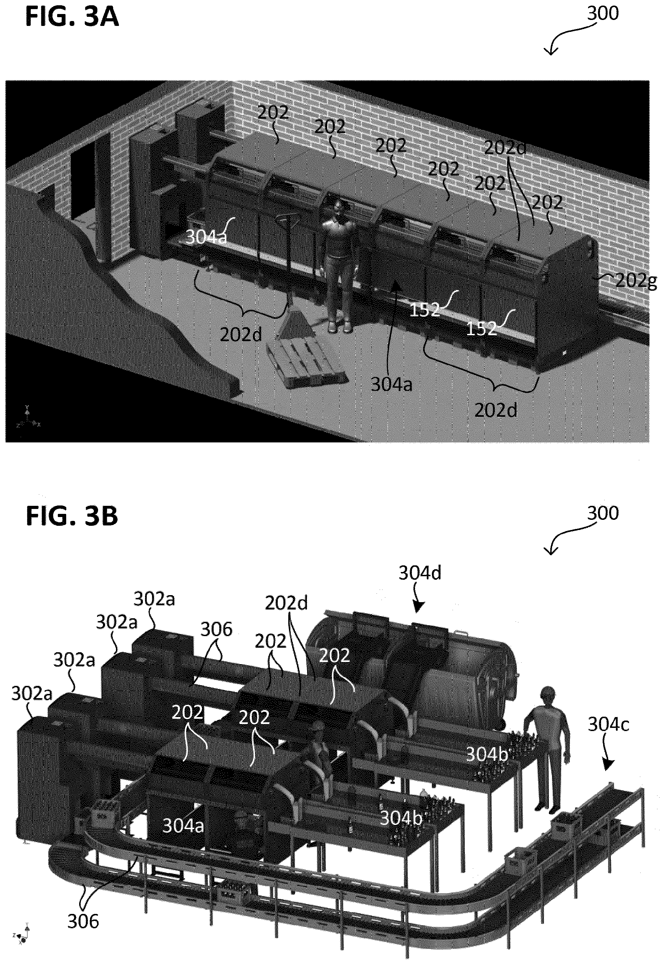

Die Kompaktoranordnung 202 kann ein Gehäuse aufweisen (siehe beispielsweise das Gehäuse 202g in Fig.3A). Der Kompaktor 102 und die Leergut-Transportvorrichtung 202t können beispielsweise zumindest teilweise in dem Gehäuse angeordnet sein. Das Gehäuse kann zumindest eine erste Öffnung aufweisen, durch welche hindurch der Kompaktoranordnung 202 das Leergut 104 zugeführt (z.B. mittels der Leergut-Transportvorrichtung 202t aufgenommen) werden kann, z.B. entlang der Transportstrecke.

Ferner kann das Gehäuse eine zweite Öffnung aufweisen. Durch die zweite Öffnung hindurch kann beispielsweise das nicht selektierte Leergut 104, welches an dem Kompaktor 102 vorbei transportiert wird, ausgegeben werden, z.B. entlang der Transportstrecke.

**Fig.3A** und **Fig.3B** veranschaulichen jeweils eine Kompaktoreinrichtung 300 (auch als Leergutrücknahmeanlage oder Leergutrücknahmeautomat bezeichnet) in einer schematischen Perspektivansicht, gemäß verschiedenen Ausführungsformen.

Die Kompaktoreinrichtung 300 kann beispielsweise eingerichtet sein, das Leergut 104 effizient zu sortieren, zu kompaktieren, etc. Dazu kann eine Ablaufkette für das Sortieren, Kompaktieren, etc. bereitgestellt sein oder werden in Verbindung mit mehreren Kompaktoranordnungen. Die Kompaktoranordnungen der Kompaktoreinrichtung 300 können beispielsweise eingerichtet sein, wie vorangehend mit Bezug auf die Kompaktoranordnung 202 beschrieben ist.

Die Ablaufkette der Kompaktoreinrichtung 300 kann an ihrem Anfang 302a beispielsweise eine Überprüfung des Leerguts 104 auf seine Rücknahmefähigkeit aufweisen. Beispielsweise können zur Überprüfung verschiedene Merkmale des Leerguts 104 (wie beispielsweise Leerguttyp, Gewicht, Gebindetyp, Barcode-Informationen, etc.) erfasst werden. Das als rücknahmefähig klassifizierte Leergut 104 kann dann von der Kompaktoreinrichtung 300 angenommen und der Ablaufkette zugeführt werden.

Beispielsweise können in der Ablaufkette mehrere Kompaktoranordnungen 202 in Serie (d.h. entlang einer gemeinsamen Transportstrecke) eingerichtet sein. Die mehreren Kompaktoranordnungen 202 können beispielsweise gemäß der Klassifizierung kompaktieren, z.B. wie vorangehend beschrieben ist.

Alternativ oder zusätzlich können die mehreren Kompaktoranordnungen 202 paarweise (z.B. zwei erste Kompaktoranordnungen und/oder zwei zweite Kompaktoranordnungen) ein Doppelmodul 202d bilden, dessen Kompaktoranordnungen 202 dieselbe Klasse (auch als Kategorie bezeichnet) kompaktieren. So kann beispielsweise eine Kompaktoranordnung 202 des Doppelmoduls 202d gewartet werden, während die andere Kompaktoranordnung 202 des Doppelmoduls 202d den Betrieb aufrechterhält. Mehrere Doppelmodule 202d können in Serie (z.B. "Rücken-an-Rücken") oder parallel zueinander (d.h. in verschiedenen Transportstrecken) angeordnet sein. Das Doppelmodul 202d kann beispielsweise zwei Kompaktoren 102 aufweisen. Diese können in einem gemeinsamen Gehäuse 202g oder in separaten Gehäusen 202g angeordnet sein.

Die Ablaufkette kann an einem Ende einen Aufnahmeraum 304a (z.B. mit einem Sammelbehälter 152 darin) aufweisen zum Aufnehmen von kompaktiertem Leergut 104k. Die Ablaufkette kann (zusätzlich dazu oder alternativ dazu) an einem weiteren Ende zumindest einen weiteren Aufnahmeraum 304b aufweisen, z.B. für Einzel-Leergut (z.B. Mehrweg-Leergut oder Glasflaschen), welches nicht kompaktiert werden soll. Ferner kann die Ablaufkette (zusätzlich dazu oder alternativ dazu) an einem weiteren Ende einen weiteren Aufnahmeraum 304c aufweisen, z.B. für Leergut-Kisten. Ferner kann die Ablaufkette (zusätzlich dazu oder alternativ dazu) an einem weiteren Ende einen weiteren Aufnahmeraum 304d aufweisen, z.B. für nicht verwertbares Leergut 104 (z.B. zu entsorgendes Leergut).

Ein Ende oder mehrere Enden der Ablaufkette können beispielsweise mittels eines Transportsystems verbunden sein. Das Transportsystem kann beispielsweise mehrere Transportstrecken 306 aufweisen und/oder an den Stellen, an denen es sich verzweigt (d.h. zwei Transportstrecken aneinandergrenzen), kann eine Selektion erfolgen.

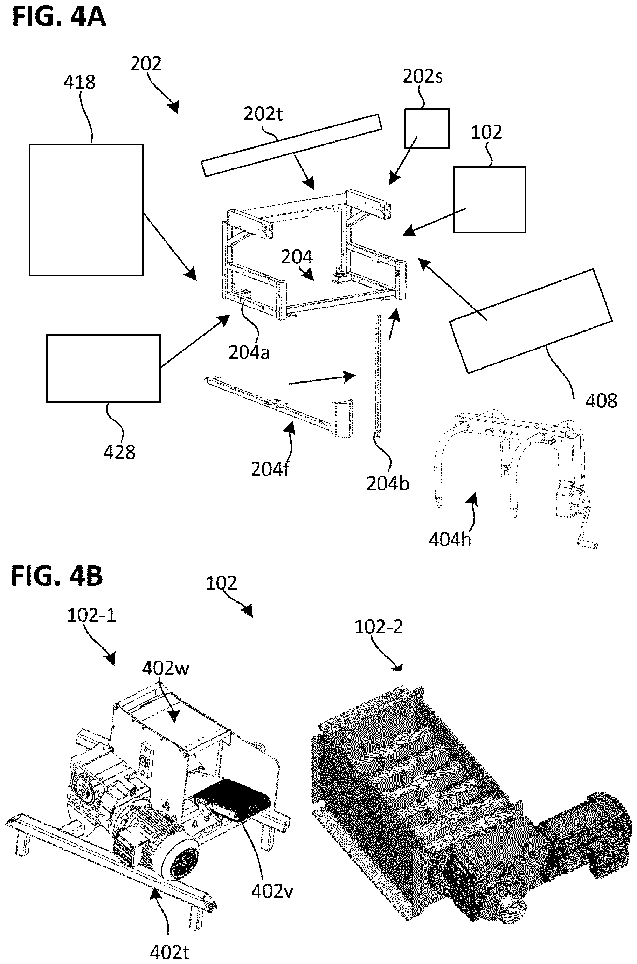

**Fig.4A** veranschaulicht verschiedene Komponenten einer Kompaktoranordnung 202, gemäß verschiedenen Ausführungsformen. Die Kompaktoranordnung 202 kann in ähnlicher oder gleicher Weise ausgestaltet sein, wie vorangehend beschrieben ist und vice versa.

Die Kompaktoranordnung 202 kann beispielsweise mindestens einen Kompaktor 102 aufweisen, der in ähnlicher oder gleicher Weise ausgestaltet sein kann, wie vorangehend beschrieben ist und vice versa.

Die Kompaktoranordnung 202 kann beispielsweise mindestens eine Gestellanordnung 204 aufweisen, die in ähnlicher oder gleicher Weise ausgestaltet sein kann, wie vorangehend beschrieben ist und vice versa. Die Gestellanordnung 204 kann beispielsweise ein Tragegestell 204a aufweisen, welches anschaulich als zentrales Element dient zum Montieren der Komponenten der Kompaktoranordnung 202 und/oder zum Aufstellen der Kompaktoranordnung 202. Die Gestellanordnung 204 kann ferner beispielsweise Stützbeine 204b aufweisen, mittels derer das Tragegestell 204a abgestützt werden kann. Ferner kann die Gestellanordnung 204 beispielsweise eine Fußbaugruppe 204f aufweisen. Die Fußbaugruppe 204f kann einen Rammschutz und/oder einen Bodenanker aufweisen. Der Rammschutz selbst kann beispielsweise austauschbar eingerichtet sein, da dieser bei einer Beschädigung gewechselt werden sollte. Der Bodenanker kann beispielsweise mit mindestens einer Bohrung versehen sein, die zur Befestigung am Boden verwendet werden kann.

Die Gestellanordnung 204 kann derart eingerichtet sein, dass das Tragegestell 204a mittels eines Hubwagens transportiert werden kann, auf dem Boden abgestellt werden kann, und mittels der Stützbeine 204b auf eine gewünschte Höhe angehoben werden kann. Zum Anheben des Tragegestells 204a kann eine Hubvorrichtung 404h verwendet werden. Es können auch mehrere Tragegestelle 204a miteinander verbunden sein oder werden und gleichzeitig angehoben werden. Beim Anheben des Tragegestells 204a können einige oder alle weiteren Komponenten der Kompaktoranordnung 202 bereits an dem Tragegestell 204a montiert sein. Ferner kann das Tragegestell 204a auch wieder abgesenkt werden. Das Tragegestell 204a kann derart eingerichtet sein, dass einige oder alle weiteren Komponenten der Kompaktoranordnung 202, die an dem Tragegestell 204a montiert sind (z.B. der Kompaktor 102), demontiert bzw. ausgetauscht werden können, ohne das Tragegestell 204a abzusenken.

**Fig.4B** veranschaulicht beispielhaft einen Kompaktor 102 in zwei verschiedenen Ausgestaltungen 102-1, 102-2. Der Kompaktor 102 kann beispielsweise in ähnlicher oder gleicher Weise eingerichtet sein, wie vorangehend beschrieben ist und vice versa.

Der Kompaktor 102 kann beispielsweise in einer ersten Ausgestaltung 102-1 ein Schneidwerk 402w aufweisen, z.B. zum Zerkleinern von Leergut 104 aus Kunststoff. Mittels einer Vorbandbaugruppe 402v kann beispielsweise das Leergut 104 in Richtung des Schneidwerks 402w geführt werden. Ferner kann der Kompaktor 102 in einer zweiten Ausgestaltung 102-2 einen Glas-Crusher aufweisen, z.B. zum Zerkleinern von Leergut 104 aus Glas.

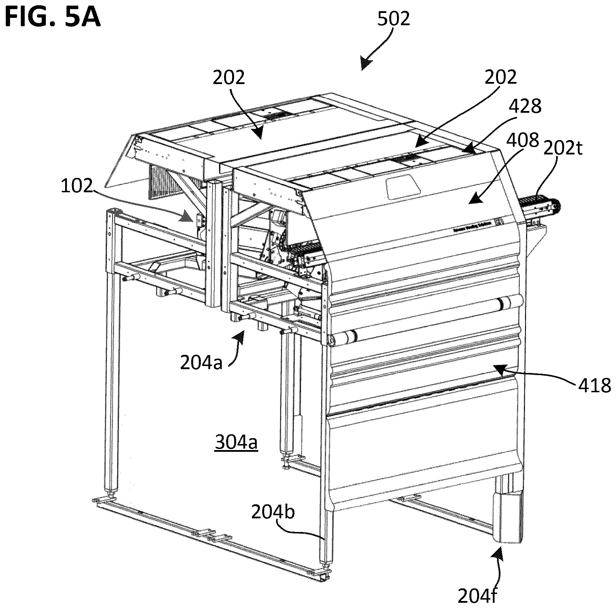

Der Kompaktor 102 kann beispielsweise auf einem Tragrahmen 402t montiert sein oder werden. Der Tragrahmen 402t kann beispielsweise passend zu dem Tragegestell 204a der Gestellanordnung 204 ausgestaltet sein (oder anschaulich als Teil der Gestellanordnung 204 verstanden werden) zum Montieren des Kompaktors 102 an dem Tragegestell 204a (siehe beispielsweise Fig.5A bis FIG.5C). Beispielsweise kann der Kompaktor 102 mittels des Tragrahmens 402t von unten in das Tragegestell 204a hineingehoben werden und an diesem lösbar befestigt werden. Ferner kann der Tragrahmen 402t von dem Tragegestell 204a gelöst werden und der Kompaktor 102 kann mittels des Tragrahmens 402t nach unten aus dem Tragegestell 204a heraus abgesenkt werden. Zum Anheben und/oder Absenken des Kompaktors 102 kann beispielsweise die Hubvorrichtung 404h verwendet werden.

Die Kompaktoranordnung 202 kann beispielsweise mindestens eine Leergut-Transportvorrichtung 202t aufweisen, die in ähnlicher oder gleicher Weise ausgestaltet sein kann, wie vorangehend beschrieben ist und vice versa.

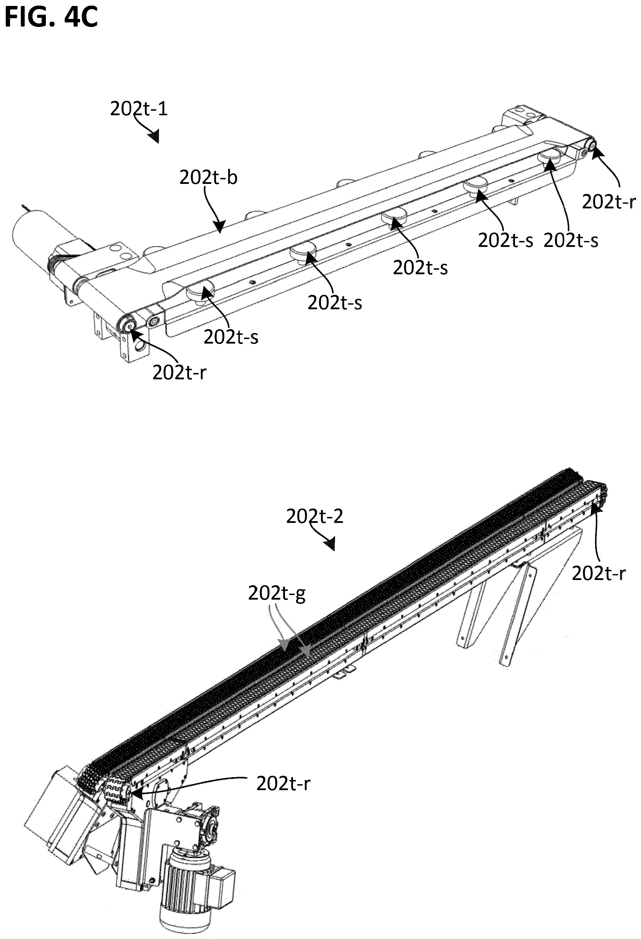

**Fig.4C** veranschaulicht beispielhaft eine Leergut-Transportvorrichtung 202t in zwei verschiedenen Ausgestaltungen 202t-1, 202t-2. Die Leergut-Transportvorrichtung 202t kann beispielsweise in ähnlicher oder gleicher Weise eingerichtet sein, wie vorangehend beschrieben ist und vice versa.

Die Leergut-Transportvorrichtung 202t kann in einer ersten Ausgestaltung 202t-1 ein Transportband 202t-b aufweisen. Anschaulich kann die Leergut-Transportvorrichtung 202t als Bandförderer 202t-1 ausgestaltet sein. Das Transportband 202t-b kann zwischen mindestens zwei Bandrollen 202t-r endlos umlaufend gelagert sein. Mittels der Bandrollen 202t-r kann das Transportband 202t-b entsprechend gespannt werden. Ferner können Abstützanordnungen 202t-s zum Bombieren des Transportbands 202t-b verwendet werden. Die jeweilige Abstützanordnung 202t-s kann beispielsweise eine Tragrolle und ein Drehlager aufweisen, wobei die Tragrolle mittels des Drehlagers um eine Drehachse drehbar gelagert ist. Dabei kann die Tragrolle eine Mantelfläche aufweisen, auf welcher das Transportband zumindest teilweise aufliegt. Die Mantelfläche kann beispielsweise schräg zu der Drehachse ausgerichtet sein.

Die Leergut-Transportvorrichtung 202t kann in einer zweiten Ausgestaltung 202t-2 beispielsweise zwei Gurtgliedbänder 202t-g aufweisen. Anschaulich kann die Leergut-Transportvorrichtung 202t als Gurtgliedförderer 202t-2 ausgestaltet sein. Die Gurtgliedbänder 202t-g können V-förmig angeordnet sein. Das jeweilige Gurtgliedband 202t-g kann zwischen mindestens zwei Bandrollen 202t-r endlos umlaufend gelagert sein. Das jeweilige Gurtgliedband 202t-g kann eine Vielzahl von Gurtgliedern aufweisen, die mechanisch (z.B. mittels Bolzen) miteinander verbunden sind. Dabei kann die nach außen frei liegende Seite des Gurtgliedbands 202t-g (anschaulich die Seite, die in Kontakt mit dem Leergut 104 kommen kann) gummiert sein.

In analoger Weise kann die Vorbandbaugruppe 402v des Kompaktors 102 als Bandförderer oder Gurtgliedförderer ausgestaltet sein.

Die Kompaktoranordnung 202 kann beispielsweise mindestens eine Selektiervorrichtung 202s aufweisen, die in ähnlicher oder gleicher Weise ausgestaltet sein kann, wie vorangehend beschrieben ist und vice versa.

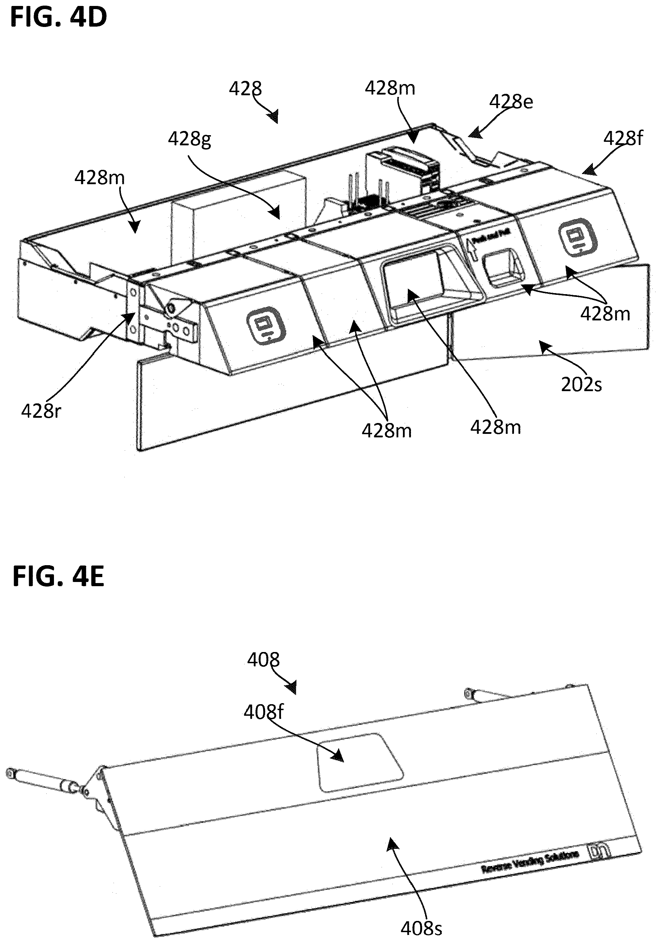

Die Kompaktoranordnung 202 kann beispielsweise mindestens eine Elektrobaugruppe 428 aufweisen, wie beispielsweise in **Fig.4D** in einer schematischen Ansicht dargestellt ist.

Die Elektrobaugruppe 428 kann beispielsweise elektrische und elektromechanische Bauelemente aufweisen zum Betreiben der Kompaktoranordnung 202, beispielsweise zum Betreiben des Kompaktors 102, der Leergut-Transportvorrichtung 202t, der Vorbandbaugruppe 402v, der Selektiervorrichtung 202s, etc. Als Betreiben kann dabei ein Steuern, ein Regeln, und/oder ein Versorgen mit elektrischer Energie verstanden werden.

Die Elektrobaugruppe 428 kann beispielsweise an dem Tragegestell 204a angeordnet sein oder werden. Die Elektrobaugruppe 428 kann beispielsweise modular ausgestaltet sein und eine Vielzahl von Modulen 428m aufweisen. Die Module 428m können beispielsweise ein oder mehrere Elektronik-Module, ein oder mehrere Elektromechanik-Module, etc., aufweisen. Die Module 428m der Elektrobaugruppe 428 können mittels einer gemeinsamen Lageranordnung 428r (z.B. eines Rahmens, etc.) lösbar (z.B. steckbar) gelagert sein oder werden. Die gemeinsame Lageranordnung 428r kann beispielsweise beweglich eingerichtet sein, z.B. kann diese verschiebbar und/oder schwenkbar eingerichtet sein. Alternativ dazu kann die gemeinsame Lageranordnung 428r ortsfest an dem Tragegestell 204a montiert sein oder werden.

In einigen Ausgestaltungen kann die Selektiervorrichtung 202s beispielsweise als Modul 428m der Elektrobaugruppe 428 ausgestaltet sein. Die Selektiervorrichtung 202s kann beispielsweise eine schwenkbar gelagerte Klappe aufweisen. Die schwenkbar gelagerte Klappe kann derart eingerichtet sein, dass diese in einer ersten Position Leergut 104 von der Leergut-Transportvorrichtung 202t zu dem Kompaktor 102 leitet, anschaulich selektiert, und in einer zweiten Position das Leergut 104 auf der Leergut-Transportvorrichtung 202t zu belassen.

Die Module 428m der Elektrobaugruppe 428 können beispielsweise derart eingerichtet sein, dass diese auf einfache Weise zugänglich sind, so dass diese beispielsweise von einem Benutzer ausgetauscht werden können.

Die Elektrobaugruppe 428 kann beispielsweise mehrere Versorgungs-Module aufweisen, die beispielsweise als Elektrokästen 428e ausgestaltet sind. Beispielsweise kann ein Elektrokasten eingerichtet sein, eine Starkstrom-Versorgung bereitzustellen. Ferner kann ein weiterer Elektrokasten eingerichtet sein, Steuerfunktionen bereitzustellen, z.B. bei einer Niederspannung, z.B. 12 V, 24 V, etc. Die Steuerfunktionen können mittels einer entsprechend eingerichteten Steuerungselektronik realisiert werden. Die Elektrokästen 428e können beispielsweise derart eingerichtet und gelagert sein, dass diese (z.B. nach oben) entnehmbar sind. Somit können diese bei Bedarf beispielsweise mittels weniger Handgriffe ausgetauscht werden. Ferner kann beispielsweise ein Freiraum 428g vorgehalten werden für einen oberseitigen Zugriff zum Schneidwerk.

Mehrere Funktions-Module der Elektrobaugruppe 428 können als Frontbaugruppe 428f ausgestaltet sein. Die Frontbaugruppe 428f kann mittels einer Verkabelungsbrücke mit den Elektrokästen 428e verbunden sein.

Die Kompaktoranordnung 202 kann beispielsweise mehrere Abdeckungen 408, 418 aufweisen. Die Abdeckungen 408, 418 können beispielsweise einen Teil eines Gehäuses (auch als Einhausung bezeichnet) bilden, welches die Komponenten der Kompaktoranordnung 202 zumindest abschnittweise einhaust. Die Abdeckungen 408, 418 können beispielsweise dazu dienen, Komponenten der Kompaktoranordnung 202 zu schützen und/oder Komponenten, die ein Risiko für einen Benutzer (z.B. eine Hochstromkomponente, ein Schneidwerk, bewegte Bauteile einer Transportvorrichtung, etc.) darstellen, abzuschirmen.

Die Einhausung der Kompaktoranordnung 202 kann beispielsweise unterteilt sein in eine obere Abdeckung 408 (z.B. eine obere Klappe) und in eine untere Abdeckung 418 (z.B. eine untere Klappe, auch als Containerklappe bezeichnet), siehe Fig. 4A. Die obere Abdeckung 408 kann beispielsweise die Transportstrecke (z.B. zumindest abschnittsweise die Leergut-Transportvorrichtung 202t der Kompaktoranordnung 202) abdecken. Die untere Abdeckung 418 kann beispielsweise einen Teil des Tragegestells 204a abdecken sowie einen Aufnahmeraum unterhalb des Tragegestells 204a, wenn dieses angehoben ist, zum Aufnehmen eines Sammelbehälters, wie beispielsweise vorangehend beschrieben ist.

**Fig.4E** veranschaulicht beispielsweise eine obere Abdeckung 408 in einer beispielhaften Ansicht.

Die obere Abdeckung 408 kann beispielsweise passend zu der Elektrobaugruppe 428 bereitgestellt sein, um beispielsweise einen einfachen Zugang zu den Modulen 428m der Elektrobaugruppe 428 zu gewährleisten, z.B. zum Austauschen eines oder mehrerer der Module 428m. Dazu kann die obere Abdeckung 408 derart beweglich montiert sein, dass diese geöffnet und geschlossen werden kann.

Ferner kann die obere Abdeckung 408 derart eingerichtet sein, dass mindestens ein Anzeigeelement eines Moduls 428m der Frontbaugruppe 428f für einen Benutzer sichtbar ist. Beispielsweise kann die obere Abdeckung 408 mindestens ein Sichtfenster 408f aufweisen, durch welches hindurch ein Anzeigeelement eines Moduls 428m der Frontbaugruppe 428f für einen Benutzer sichtbar ist.

Ferner kann die obere Abdeckung 408 derart eingerichtet sein, dass mindestens ein Eingabeelement der Module 428m der Frontbaugruppe 428f für einen Benutzer zugänglich ist.

Ferner kann die obere Abdeckung 408 derart eingerichtet sein, dass Leergut, das mittels der Leergut-Transportvorrichtung 202t in der Kompaktoranordnung 202 transportiert wird, für einen Benutzer sichtbar ist. Beispielsweise kann die obere Abdeckung 408 mindestens ein weiteres Sichtfenster 408s aufweisen, durch welches hindurch Leergut, das mittels der Leergut-Transportvorrichtung 202t in der Kompaktoranordnung 202 transportiert wird, für einen Benutzer sichtbar ist.

Die obere Abdeckung 408 kann beispielsweise als obere Klappe eingerichtet sein derart, dass sich diese automatisch öffnet. Das Öffnen kann beispielsweise mittels Gestik-Steuerung erfolgen oder mittels einer anderen Steuerung, z.B. einem Taster, einem Berührungssensor, etc. Der Öffnungsmechanismus der oberen Klappe kann beispielsweise mechanisch mittels zweier Gasdruckfedern realisiert sein oder auf eine andere geeignete Weise. In der entsprechenden Geschlossen-Stellung kann die obere Klappe mittels eines Fangriegelverschlusses gehalten werden. Die obere Abdeckung 408 kann derart bereitgestellt sein, dass diese werkzeugfrei entnehmbar bzw. austauschbar ist.

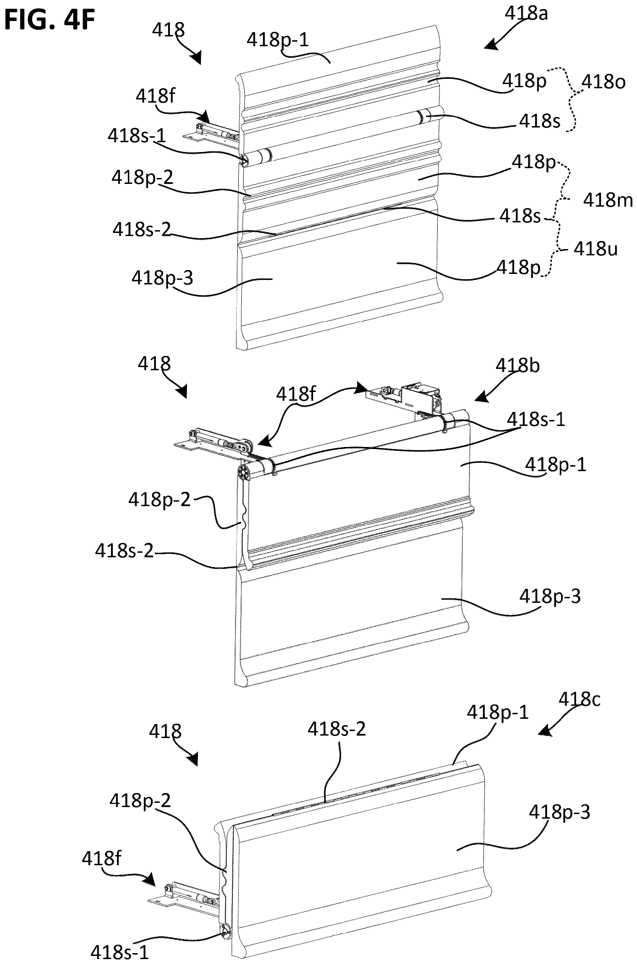

**Fig.4F** veranschaulicht beispielsweise eine untere Abdeckung 418 in verschiedenen Positionen 418a, 418b, 418c in einer beispielhaften Ansicht, gemäß verschiedenen Ausführungsformen.

Die untere Abdeckung 418 kann beispielsweise als eine Klappenanordnung 418 eingerichtet sein derart, dass diese mittels eines mehrteiligen Klappmechanismus in verschiedene Positionen 418a, 418b, 418c bewegt (z.B. geschwenkt bzw. geklappt) werden kann.

Gemäß der Erfindung ist die untere Abdeckung 418 eine dreiteilige Klappenanordnung 418, wie nachfolgend im Detail beschrieben ist.

Wie in Fig.4F beispielhaft dargestellt ist, weist die Klappenanordnung 418 eine erste Abdeckplatte 418p-1, eine zweite Abdeckplatte 418p-2 und eine dritte Abdeckplatte 418p-3 auf . Die mehrere Abdeckplatten 418p können beispielsweise mittels mehrerer Scharnieranordnungen 418s, z.B. einer ersten Scharnieranordnung 418s-1 und einer zweiten Scharnieranordnung 418s-2, in verschiedene Positionen 418a, 418b, 418c bewegt werden.

Die Klappenanordnung 418 kann dabei mindestens eine Fixieranordnung 418f aufweisen.

Die Fixieranordnung 418f kann beispielsweise die Klappenanordnung 418 in einer Geschlossen-Stellung 418a, in einer ersten Offen-Stellungen 418b, und/oder in einer zweiten Offen-Stellung 418c fixieren. Zum Fixieren der Klappenanordnung 418 in der jeweiligen Position kann zumindest eine der Abdeckplatten 418 Fixieranordnung 418f ortsfest gehalten werden.

In der Geschlossen-Stellung 418a können die zweite Abdeckplatte 418p-2 und die dritte Abdeckplatte 418p-3 aufgrund der Schwerkraft stabil gelagert sein (anschaulich können diese gemeinsam an der ersten Scharnieranordnung 418s-1 hängen).

Die dreiteilige Klappenanordnung 418 kann anschaulich zweiteilig gegliedert sein, d.h. beispielsweise anschaulich drei Klappen 418o, 418m, 418u aufweisen.

Die erste (z.B. obere) Abdeckplatte 418p-1 kann beispielsweise mit der zugehörigen ersten Scharnieranordnung 418s-1 eine obere Schwenkklappe 418o bilden. Die obere Schwenkklappe 418o kann beispielsweise derart eingerichtet sein, dass diese um ungefähr 180° geschwenkt werden kann, z.B. wenn die Klappenanordnung 418 aus der Geschlossen-Stellung 418a in die erste Offen-Stellung 418b gebracht werden soll und vice versa.

Die obere Schwenkklappe 418o kann beispielsweise in der Geschlossen-Stellung 418a mittels der Fixieranordnung 418f gehalten werden. Die obere Schwenkklappe 418o kann beispielsweise am Tragegestell 204a der Gestellanordnung 204 lösbar fixiert werden, siehe beispielsweise Fig.5A bis 5C.

Die obere Schwenkklappe 418o der Klappenanordnung 418 kann beispielsweise derart eingerichtet sein, dass diese nur geöffnet werden kann (siehe erste Offen-Stellung 418b), wenn die obere Abdeckung 408 bereits geöffnet ist.

Wie beispielsweise in Fig.4F veranschaulicht ist, kann die mittlere Abdeckplatte 418p-2 mit der zugehörigen zweiten Scharnieranordnung 418s-2 eine mittlere Schwenkklappe 418m bilden. Die untere Abdeckplatte 418p-3 kann beispielsweise mit der zugehörigen zweiten Scharnieranordnung 418s-2 eine untere Schwenkklappe 418u bilden.

In der Geschlossen-Stellung 418a können die Schwenkklappen bzw. Abdeckplatten 418 der Klappenanordnung 418 in einer gemeinsamen Ebene angeordnet sein. Die Schwenkklappen bzw. Abdeckplatten 418 der Klappenanordnung 418 bilden dann eine im Wesentlichen geschlossene Fläche.

In der ersten Offen-Stellung 418b können die mittlere Schwenkklappe 418m und die untere Schwenkklappe 418u (bzw. die zweite Abdeckplatte 418p-2 und die dritte Abdeckplatte 418p-3) der Klappenanordnung 418 in einer gemeinsamen Ebene angeordnet sein. Diese bilden dann eine im Wesentlichen geschlossene Fläche. In der ersten Offen-Stellung 418b kann die obere Schwenkklappe 418o (bzw. die erste Abdeckplatte 418p-1) über die mittlere Schwenkklappe 418m (bzw. die zweite Abdeckplatte 418p-2) geklappt sein.

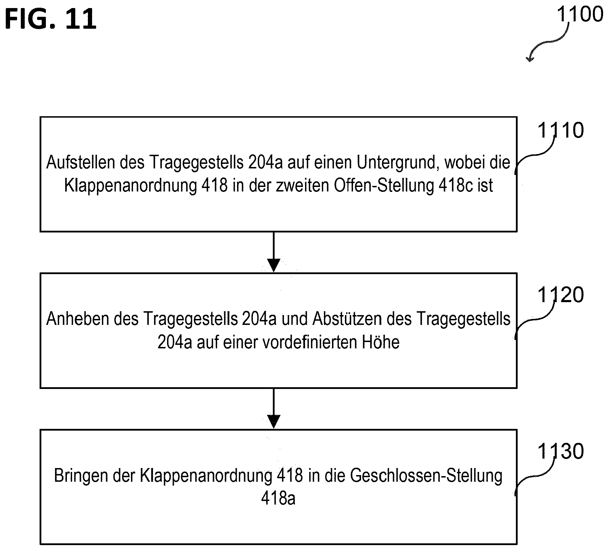

In der zweiten Offen-Stellung 418c, kann die obere Schwenkklappe 418o in der gleichen Stellung sein, wie in der Geschlossen-Stellung 418a. Die mittlere Schwenkklappe 418m sowie die untere Schwenkklappe 418u können einander entgegengesetzt eingeklappt werden und nach oben geschwenkt werden. In der zweiten Offen-Stellung 418c können die drei Schwenkklappen (bzw. Abdeckplatten 418) der Klappenanordnung 418 übereinander angeordnet sein. So wird ein geringer Platzbedarf beim Schwenken benötigt. Ferner wird ein geringer Platzbedarf in der zweiten Offen-Stellung 418c benötigt, so dass die Kompaktoranordnung 202 beispielsweise in diese Position platzsparend transportiert werden kann und gleichzeitig auf einfache Weise montiert werden kann (siehe Fig.11).

Die Klappenanordnung 418 kann beispielsweise derart eingerichtet sein, dass diese händisch unterstützt oder vollautomatisch geöffnet werden kann. Dazu kann die Klappenanordnung 418 eine geeignete Antriebssystematik aufweisen.

Die Klappenanordnung 418 kann beispielsweise derart eingerichtet sein, dass sich die untere Schwenkklappe 418u selbsttätig relativ zu der mittleren Schwenkklappe 418m bewegt, wenn die mittlere Schwenkklappe 418m bewegt wird. Somit kann es beispielsweise ausreichend sein, die mittlere Schwenkklappe 418m mittels eines Aktors zu bewegen um die Klappenanordnung 418 in die zweite Offen-Stellung 418c zu bringen.

Beispielsweise kann ein vollautomatischer Öffnungs- und Schließmechanismus bereitgestellt sein oder werden. Alternativ dazu kann ein vollautomatischer Öffnungsmechanismus und ein manueller Schließmechanismus bereitgestellt sein oder werden, ein manueller Öffnungsmechanismus und ein vollautomatischer Schließmechanismus, oder ein manueller Öffnungs- und Schließmechanismus.

Wie vorangehend beispielhaft beschrieben ist, kann die obere Abdeckung 408 derart eingerichtet sein, dass diese vollautomatisch geöffnet und/oder vollautomatisch geschlossen werden kann. Ferner kann die Klappenanordnung 418 derart eingerichtet sein, dass diese vollautomatisch geöffnet und/oder vollautomatisch geschlossen werden kann.

Dabei kann eine Kompaktoreinrichtung 300, die beispielsweise mehrere Kompaktoranordnungen 202 aufweist, eine zentrale Steuerung aufweisen (z.B. implementiert in der Elektrobaugruppe 428, z.B. implementiert in eine kompaktoranordnung-externe Steuervorrichtung, etc.), zum jeweiligen vollautomatischen Öffnen und/oder vollautomatischen Schließen der unteren Klappenanordnung 418 und/oder der oberen Abdeckung 408. Die jeweilige Bewegung zum Öffnen und/oder Schließen kann mittels eines Sensors ausgelöst werden, z.B. basierend auf Gestenerkennung eines Benutzers, einer Eingabe eines Benutzers an einem Bedienfeld, eines Schalters, etc. Alternativ dazu kann das Öffnen und/oder das Schließen zeitgesteuert erfolgen oder automatisch basierend auf einem Auslöseereignis (z.B. eines Fehlersignals, etc.).

Gemäß verschiedenen Ausführungsformen kann die Fixieranordnung 418f eine mechanische Halterung, eine elektromechanische Halterung, eine magnetische Halterung, eine elektromagnetische Halterung, etc. aufweisen.

Wie in Fig.4F beispielhaft veranschaulicht ist, kann eine Kompaktoranordnung 202, gemäß verschiedenen Ausführungsformen, eine Klappenanordnung 418 aufweisen. Die Klappenanordnung 418 kann an dem Tragegestell 204a montiert sein. Beispielsweise kann die erste Scharnieranordnung 418s-1 an dem Tragegestell 204a befestigt sein. Die zweite Scharnieranordnung 418s-2 kann beispielsweise nur die zweite Abdeckplatte 418p-2 und die dritten Abdeckplatte 418p-3 miteinander beweglich verbinden.

Die mehreren Scharnieranordnungen 418s der Klappenanordnung 418 können beispielsweise derart ausgestaltet sein, dass deren Dreh- bzw. Schwenkachsen im Wesentlichen parallel zueinander ausgerichtet sind.

Die erste Scharnieranordnung 418s-1 kann beispielsweise an einem ersten Endabschnitt der zweiten Abdeckplatte 418p-2 montiert sein und die zweite Scharnieranordnung 418s-2 kann an einem dem ersten Endanschnitt gegenüberliegenden zweiten Endabschnitt der zweiten Abdeckplatte 418p-2 montiert sein.

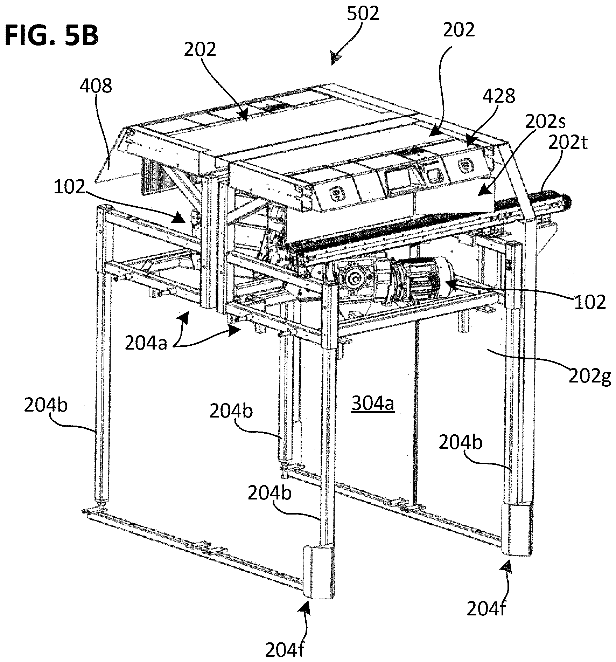

**Fig.5A** bis **Fig.5C** veranschaulichen jeweils einen Kompaktoranordnung-Verbund 502 mit mehreren Kompaktoranordnungen 202 in verschiedenen Darstellungen. Die Kompaktoranordnungen 202 können beispielsweise derart ausgestaltet sein, wie vorangehend beschrieben ist. Der Kompaktoranordnung-Verbund 502 kann anschaulich als ein Doppelmodul ausgestaltet sein, wie in Fig.5A und Fig.5B beispielhaft dargestellt ist.

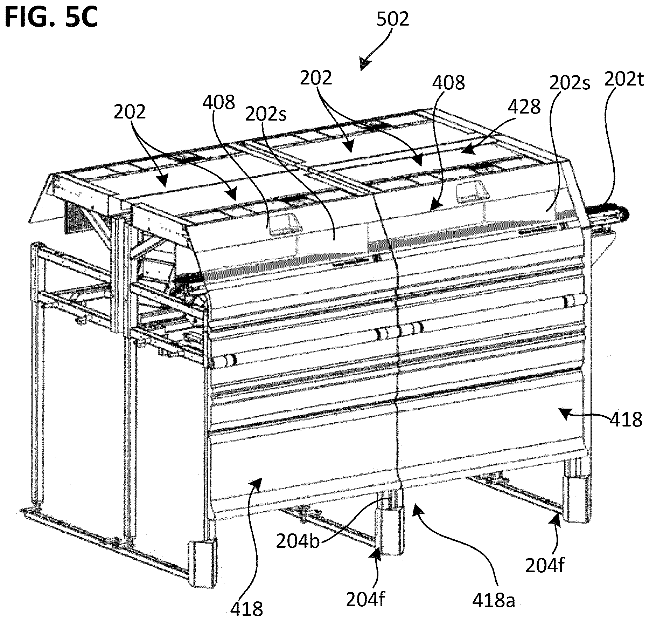

Ferner kann der Kompaktoranordnung-Verbund 502 mehrere Doppelmodule aufweisen, z.B. zwei in Reihe angeordnete Doppelmodule, wie in Fig.5C beispielhaft dargestellt ist. Andere Konfigurationen, z.B. eine einzeln aufgestellte Kompaktoranordnung 202, zwei einzelne in einer Reihe angeordnete Kompaktoranordnungen 202, etc. sind ebenfalls möglich. Dazu kann beispielsweise die jeweilige Gestellanordnung 204 entsprechend modifiziert werden, z.B. kann eine einzelne Kompaktoranordnung 202 mittels vier Stützbeinen 204b aufgestellt sein oder werden und ein Doppelmodul mit zwei Kompaktoranordnungen 202 kann beispielsweise mittels mindestens vier (z.B. vier, sechs oder acht) Stützbeinen 204b aufgestellt sein oder werden.

Das jeweilige Doppelmodul kann beispielsweise zwei Kompaktoranordnungen 202 aufweisen, die Rücken-an-Rücken zueinander angeordnet sind. Somit sind beispielsweise zwei Transportstrecken 306 jeweils von einander gegenüberliegenden Seiten des Doppelmoduls zugänglich. Die Transportstrecken 306 werden von den jeweiligen Leergut-Transportvorrichtungen 202t der Kompaktoranordnungen 202 gebildet.

Mittels jeweils einer Selektiervorrichtung 202s kann Leergut selektiv von den Transportstrecken 306 in den jeweiligen Kompaktor 102 der Kompaktoranordnung 202 geführt werden. Nach dem Zerkleinern des Leerguts kann diese in einem Sammelbehälter gesammelt werden, der unterhalb des jeweiligen Kompaktors 102 in dem Aufnahmeraum 304a angeordnet sein oder werden kann. Zum Austauschen bzw. Einbringen des Sammelbehälters in den Aufnahmeraum 304a und/oder Herausnehmen des Sammelbehälters aus dem Aufnahmeraum 304a kann die Klappenanordnung 418 geöffnet werden, z.B. kann die Klappenanordnung 418 in die zweite Offen-Stellung 418c geklappt werden, wie vorangehend beschrieben ist. Ferner kann die Klappenanordnung 418 zum Warten und/oder Montieren des Kompaktors 102, der Leergut-Transportvorrichtungen 202t, etc. geöffnet werden, z.B. kann die Klappenanordnung 418 in die erste Offen-Stellung 418b geklappt werden, wie vorangehend beschrieben ist.

Wie beispielsweise in Fig.5A und Fig.5B veranschaulicht ist, kann die Klappenanordnung 418 derart eingerichtet sein, dass die zweite Abdeckplatte 418p-2 und die dritte Abdeckplatte 418p-3 den Aufnahmeraum 304a zum Aufnehmen des Sammelbehälters zumindest abschnittsweise abdecken, wenn diese in der Geschlossen-Stellung 418a ist.

Wie beispielsweise in Fig.5C veranschaulicht ist, kann sich eine gemeinsame Leergut-Transportvorrichtung 202t durch zwei einander benachbarte Kompaktoranordnungen 202 hindurch erstrecken. Ferner kann sich die Leergut-Transportvorrichtung 202t durch eine Öffnung in der Seitenwand des Gehäuses 202g hindurch erstrecken und derart eingerichtet sein, dass ein Abstand der Kompaktoranordnung 202 zu einer weiteren Kompaktoranordnung 202 oder zu einem anderen Transportsystem überbrückt werden kann.

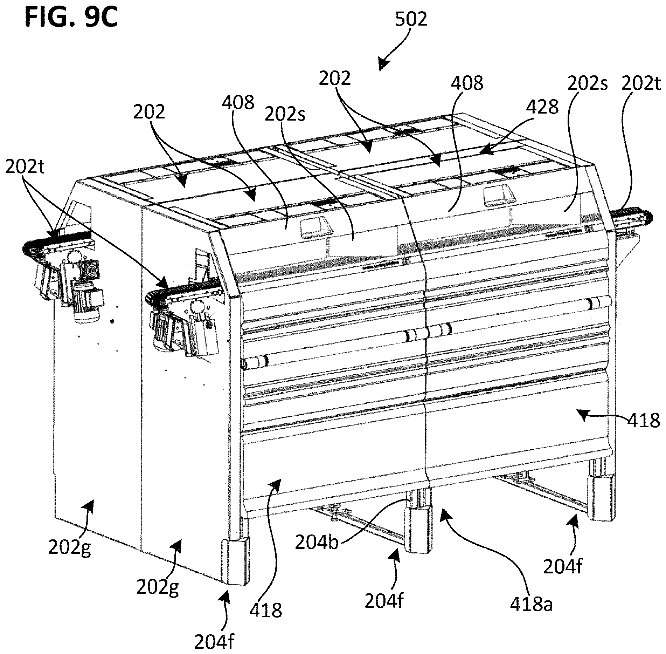

Ferner können weitere Gehäuseteile montiert werden, z.B. seitliche Gehäuseteile, obere Gehäuseteile, etc., wie beispielsweise in Fig.9C veranschaulicht ist.

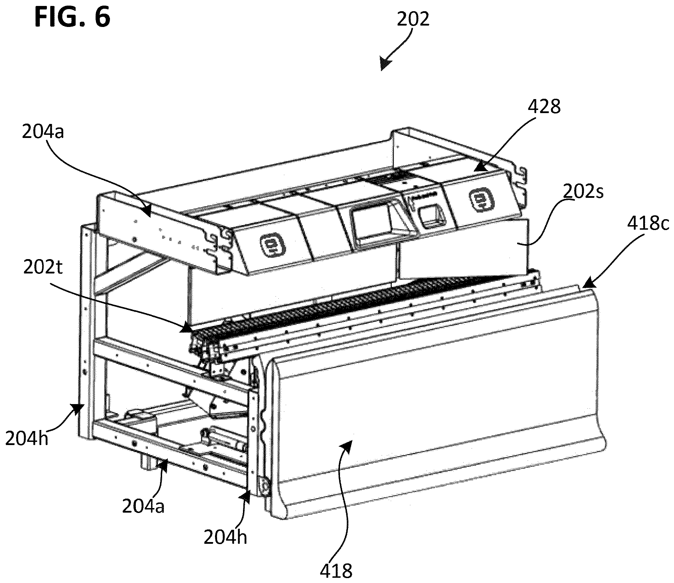

Fig.6 veranschaulicht eine Kompaktoranordnung 202 in einer schematischen Darstellung, z.B. während des Transportierens, z.B. vor dem Aufstellen.

Dabei kann die Kompaktoranordnung 202 modular ausgestaltet sein, z.B. wie vorangehend beschrieben ist. Aufgrund einer modularen Ausgestaltung, insbesondere der Gestellanordnung 204 und/oder der Klappenanordnung 418, kann die Kompaktoranordnung 202 auf einfache Weise transportiert und aufgestellt werden. Während eines Transports kann die Kompaktoranordnung 202 mittels weniger Montageschritte auf ein geringes Volumen gebracht werden. In analoger Weise kann die Kompaktoranordnung 202 mittels weniger Montageschritte aufgestellt werden.

Wie beispielsweise in Fig.6 dargestellt ist, kann die Klappenanordnung 418, wie vorangehend beschrieben, in der zweiten Offen-Stellung 418c sein, während die Kompaktoranordnung 202 zu deren Aufstellort transportiert und/oder von deren Aufstellort abtransportiert wird.

In dieser Position können die Abdeckplatten 418 der Klappenanordnung 418 mittels der Fixieranordnung 418f oder mittels einer weiteren Fixieranordnung gehalten werden. Anschaulich kann eine Fixieranordnung oder können mehrere Fixieranordnungen zum Fixieren der drei Abdeckplatten 418 der Klappenanordnung 418 in der zweiten Offen-Stellung 418c eingerichtet sein.

In der zweiten Offen-Stellung 418c kann beispielsweise ein Bereich des Tragegestells 204a, in dem der Kompaktor 102 angeordnet ist oder aufgenommen werden kann, von mindestens der ersten Abdeckplatte 418p-1 zumindest abschnittsweise abgedeckt sein. Die Elektrobaugruppe 428 der Kompaktoranordnung 202 kann beispielsweise zugänglich sein, unabhängig von der Position der Klappenanordnung 418. Die Leergut-Transportvorrichtung 202t kann beispielsweise abschnittsweise abgedeckt sein, z.B. kann ein direkter Zugang von vorn mittels der Klappenanordnung 418 verhindert sein, wenn diese in der Geschlossen-Stellung 418a oder in der zweiten Offen-Stellung 408c ist, aber nicht verhindert sein, wenn die Klappenanordnung 418 in der ersten Offen-Stellung 408b ist.

Eine modulare Ausgestaltung der weiteren Komponenten der Kompaktoranordnung 202, insbesondere der Elektrobaugruppe 428, der Leergut-Transportvorrichtung 202t, des Kompaktors 102, etc. kann die Kompaktoranordnung 202 auf einfache Weise gewartet werden, zum Beispiel können defekte Bauteile auf einfache Weise ausgetauscht werden, verschmutzte Teile auf einfache Weise gereinigt werden, etc.

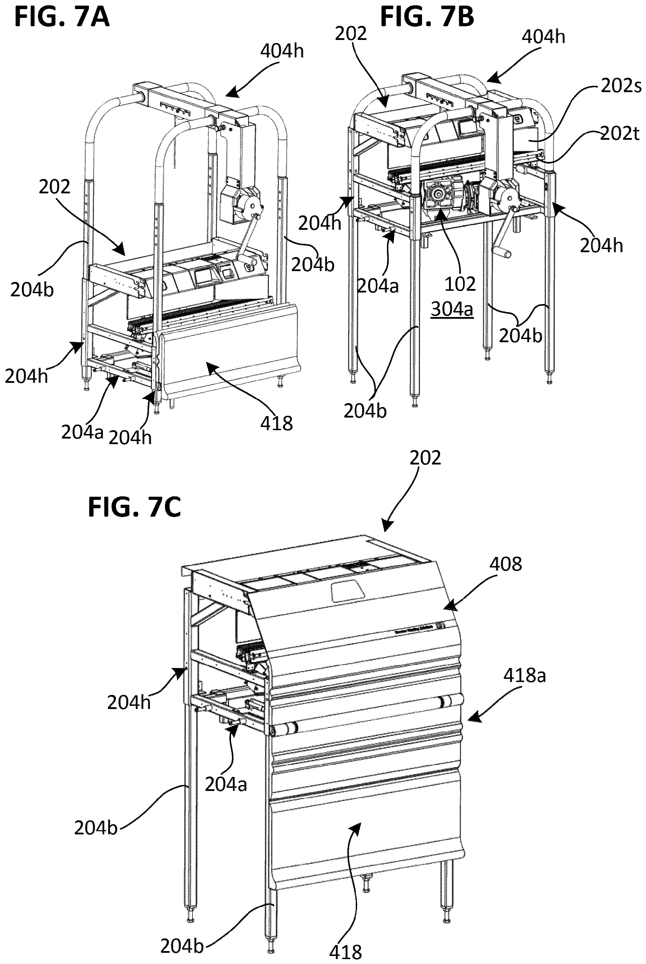

**Fig.7A** bis **Fig.7C** veranschaulichen eine Kompaktoranordnung 202 in verschiedenen Darstellungen, z.B. während des Aufstellens bzw. Montierens der mehreren Kompaktoranordnungen 202.

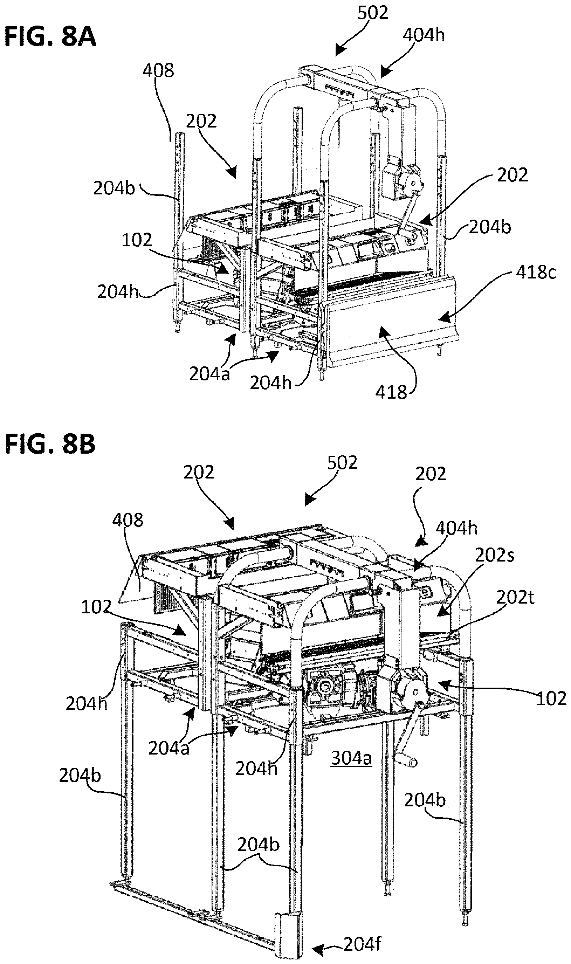

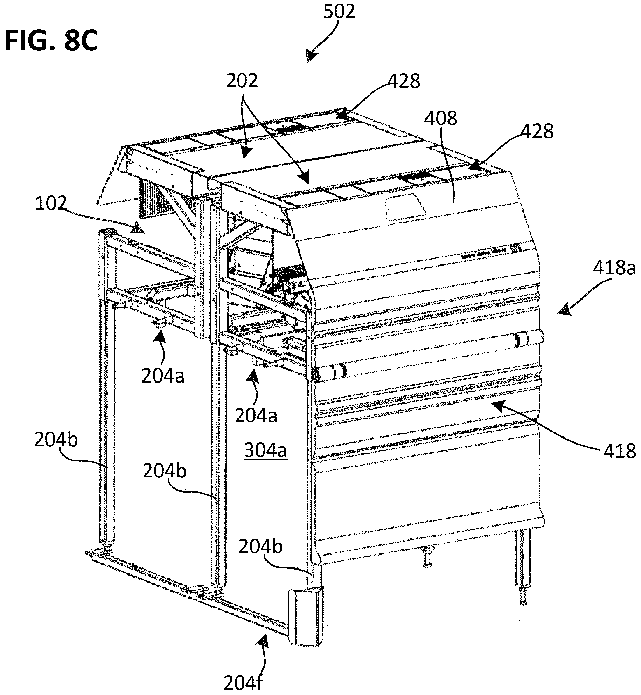

**Fig.8A** bis **Fig.8C** veranschaulichen zwei Kompaktoranordnungen 202 (z.B. ein Doppelmodul 202d bzw. ein Kompaktoranordnung-Verbund 502) in verschiedenen Darstellungen, z.B. während des Aufstellens bzw. Montierens der zwei Kompaktoranordnungen 202.

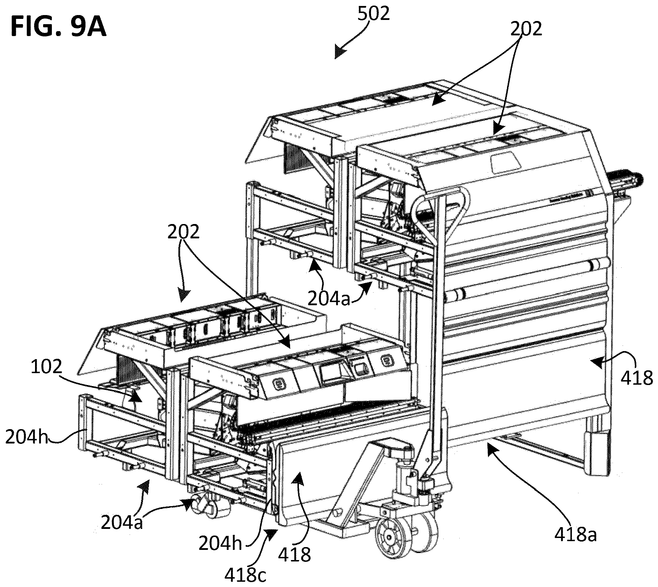

**Fig.9A** bis **Fig.9C** veranschaulichen vier Kompaktoranordnungen 202 (z.B. zwei Doppelmodule 202d bzw. ein Kompaktoranordnung-Verbund 502) in verschiedenen Darstellungen, z.B. während des Aufstellens bzw. Montierens der vier Kompaktoranordnungen 202.

Fig.7A, Fig.8A und Fig.9A zeigen jeweils beispielhaft eine oder mehrere auf dem Boden abgestellte Kompaktoranordnungen 202 (siehe ferner beispielsweise Fig.6). Dabei kann das Tragegestell 204a der Gestellanordnung 204 mehrere Hohlprofile 204h aufweisen. Diese Hohlprofile 204h sind beispielsweise derart passend zu den Stützbeinen 204b der Gestellanordnung 204 ausgestaltet, dass je ein Stützbein 204b durch je ein Hohlprofil 204h hindurch gesteckt werden kann zum Aufstellen des Tragegestells 204a auf dem Boden.

Die Stützbeine 204b können beispielsweise mittels einer Hubvorrichtung 404h durch die mehreren Hohlprofile 204h hindurch bewegt werden zum Anheben des Tragegestells 204a auf eine vordefinierte Höhe, wie beispielsweise jeweils in Fig.7B, Fig.8B und Fig.9B veranschaulicht ist.

Die Hubvorrichtung 404h kann beispielsweise derart eingerichtet sein, dass eine Kraft zwischen dem Tragegestell 204a und den Stützbeinen 204b übertragen wird zum Anheben des Tragegestells 204a. Die Hubvorrichtung 404h kann dazu beispielsweise auf den mehreren Stützbeinen 204b abgestützt (z.B. aufgesteckt oder aufgesetzt) sein oder werden. Das Tragegestell 204a kann beispielsweise eine Aufhängstruktur aufweisen zum Ankuppeln der Hubvorrichtung (zum Beispiel mittels eines Zugmittels, z.B. ein Seil, eine Kette, etc.), so dass das Tragegestell 204a mittels der Hubvorrichtung 404h angehoben werden kann.

Eine Verbindungsstruktur (z.B. Bolzen, Schrauben, etc.) kann zum Verbinden des Tragegestells 204a mit den mehreren Stützbeinen 204b verwendet werden, dass das Tragegestell 204a auf den Stützbeinen 204b in der vordefinierten Höhe abgestützt wird.

Ferner kann das Tragegestell 204a ein erstes Tragegestellteil und ein zweites Tragegestellteil (beispielsweise einen Tragrahmen 402t, wie vorangehend beschrieben ist) aufweisen. Dabei kann der Kompaktor 102 der Kompaktoranordnung 202 auf dem zweiten Tragegestellteil angeordnet sein. Das erste Tragegestellteil kann derart eingerichtet sein (siehe beispielsweise FIG.4A, Fig.4B und Fig.5B), dass dieses einen Aufnahmeraum zum Aufnehmen des auf dem zweiten Tragegestellteil angeordneten Kompaktors 102 bildet.

Anschaulich kann die Kompaktoranordnung 202 beispielsweise in folgender Weise montiert (z.B. aufgestellt) werden: Aufstellen eines Tragegestells 204a auf einen Untergrund, wobei das Tragegestell 204a mehrere Hohlprofile 204h aufweist; Einstecken mehrerer Stützbeine 204b in die mehreren Hohlprofile 204h hinein, wobei jeweils ein Stützbein 204b der mehreren Stützbeine 204b in ein Hohlprofil 204h der mehreren Hohlprofile 204h gesteckt ist; Durchschieben der jeweiligen Stützbeine 204b durch die zugehörigen Hohlprofile 204h zum Anheben des Tragegestells 204a auf eine vordefinierte Höhe; und Verbinden des Tragegestells 204a mit den mehreren Stützbeinen 204b, so dass das Tragegestell 204a auf den mehreren Stützbeinen 204b in der vordefinierten Höhe abgestützt wird. Dabei kann zum Durchschieben der Stützbeine 204b durch die Hohlprofile 204h hindurch eine Hubkraft (z.B. mittels eine Zugmittels erzeugt) zwischen den Stützbeinen 204b und dem Tragegestell 204a erzeugt werden.

Anschaulich kann das Tragegestell 204a mittels der Stützbeine 204b und der Hubvorrichtung 404h selbsthebend aufgestellt werden.

Fig.7C, Fig.8C und Fig.9C zeigen jeweils beispielhaft eine oder mehrere aufgestellte Kompaktoranordnungen 202 (siehe ferner beispielsweise Fig.5A bis 5C und Fig.6).

Nach dem Anheben der jeweiligen Kompaktoren 102 mittels des Tragegestells 204a und der Stützbeine 204b auf eine vordefinierte Höhe, können beispielsweise weitere Komponenten der Kompaktoranordnung 202 montiert werden. Beispielsweise kann die obere Abdeckung 408 der jeweiligen Kompaktoranordnung 202 montiert werden. Ferner kann eine gemeinsame Leergut-Transportvorrichtung 202t montiert werden. Ferner kann ein Gehäuse 202g montiert werden, z.B. können ein oder mehrere Gehäuseteile montiert werden. Das Gehäuse kann beispielsweise seitliche und/oder obere Gehäuseteile aufweisen.

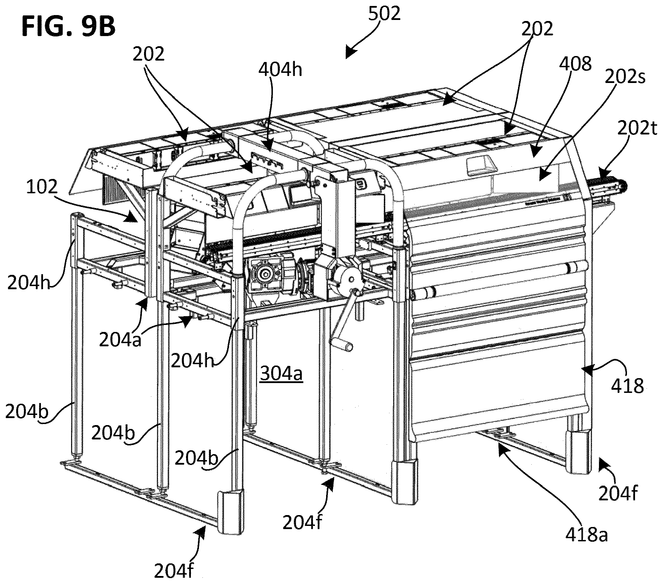

Wie in Fig.8B und 9B veranschaulicht ist, können mehrere Kompaktoranordnungen 202 mittels einer gemeinsamen Fußbaugruppe 204f montiert werden.

Wie in Fig.8B und 9B veranschaulicht ist, können beispielsweise zwei miteinander gekuppelte Tragegestelle 204a zweier Kompaktoranordnungen 202 gemeinsam angehoben werden. Dazu können sechs Stützbeine 204b verwendet werden. Anschließend können die mittleren zwei Stützbeine 204b wieder demontiert werden und die zwei Kompaktoranordnungen 202 können mittels vier Stützbeinen 204b aufgestellt sein.

Wie in Fig.9A veranschaulicht ist, kann die Kompaktoranordnung 202 mit demontierten Stützbeinen 204b geliefert werden und beispielsweise mittels eines Hubwagens transportiert werden.

Das Tragegestell 204a kann beispielsweise zweiteilig ausgestaltet sein, d.h. ein erstes und ein zweites Tragegestellteil aufweisen. Beispielsweise kann die Gestellanordnung 204 das Tragegestell 204a als erstes Tragegestellteil aufweisen, wie beispielsweise in Fig.4A dargestellt ist, und ferner kann die Gestellanordnung 204 den Tragrahmen 402t als zweites Tragegestellteil aufweisen, wie beispielsweise in Fig.4B dargestellt ist. Die beiden Tragegestellteile können beispielsweise lösbar miteinander gekuppelt sein oder werden, wie beispielsweise in Fig.6 und in den Figuren 7A bis 9C dargestellt ist.

Der Kompaktor 102 zum Kompaktieren von Leergut 104 kann beispielsweise auf dem zweiten Tragegestellteil angeordnet sein, wobei das erste Tragegestellteil 402t mit den Stützbeinen 204b verbunden werden kann. Somit kann beispielsweise der Kompaktor 102 ausgetauscht werden, ohne den Rest der Kompaktoranordnung 202 zu demontieren. Der Kompaktor 102 kann beispielsweise gemeinsam mit dem zweiten Tragegestellteil mittels einer Hubvorrichtung abgesenkt werden, während das erste Tragegestellteil mittels der Stützbeine aufgestellt bleibt.

Ein Montieren der Kompaktoranordnung 202 kann beispielsweise Folgendes aufweisen: Aufstellen eines ersten Tragegestellteils, wobei das erste Tragegestellteil einen Aufnahmeraum zum Aufnehmen eines zweiten Tragegestellteils aufweist; Anordnung des zweiten Tragegestellteils unterhalb des Aufnahmeraums, wobei ein Kompaktor auf dem zweiten Tragegestellteil angeordnet ist; Einbringen des auf dem zweiten Tragegestellteil angeordneten Kompaktors in den Aufnahmeraum des ersten Tragegestellteils; und anschließend Befestigen des zweiten Tragegestellteils an dem ersten Tragegestellteil mittels einer lösbaren Verbindung.

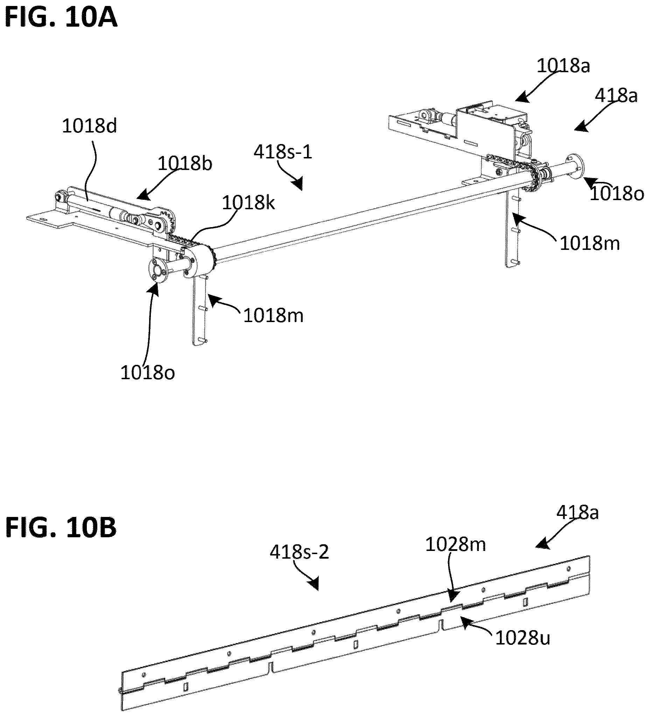

**Fig.10A** veranschaulicht die erste Scharnieranordnung 418s-1 und eine Fixieranordnung 418f der Klappenanordnung 418, gemäß verschiedenen Ausführungsformen.

Zum automatischen oder halbautomatischen Klappen der Klappenanordnung 418 in die verschiedenen Stellungen, wie vorangehend beschrieben ist, kann eine oder können mehrere Gasdruckfedern verwendet werden. Alternativ oder zusätzlich kann ein Elektromotor verwendet werden. Die Fixieranordnung 418f kann beispielsweise als Fangverriegelung ausgestaltet sein zum Fixieren der oberen Klappe 418o.

Zum Bewegen der jeweiligen Klappen kann die Klappenanordnung 418 einen Aktor (z.B. eine Gasdruckfeder oder einen Elektromotor) 1018a auf einer Seite aufweisen sowie ein Kompensationselement 1018b auf der anderen Seite, welches eingerichtet ist, eine kompensatorische Gegenbewegung durchzuführen. Damit kann beispielsweise bei einem einseitig angetriebenen System eine Wanderung des Schwerpunktes vermieden werden.

Gemäß verschiedenen Ausführungsformen kann die erste Scharnieranordnung 418s-1 ein erstes Scharnierelement 1018o aufweisen. Die erste Abdeckplatte 418p-1 kann beispielsweise an das erste Scharnierelement 1018o gekuppelt sein oder werden. Ferner kann die erste Scharnieranordnung 418s-1 ein zweites Scharnierelement 1018m aufweisen. Die zweite Abdeckplatte 418p-2 kann beispielsweise an das zweite Scharnierelement 1018m gekuppelt sein oder werden.

Gemäß verschiedenen Ausführungsformen kann ein Drehmoment auf das erste Scharnierelement 1018o und/oder auf das zweite Scharnierelement 1018m übertragen werden, z.B. mittels einer Kette 1018k, die mit einer Gasdruckfeder 1018d oder einem anderen Aktor gekuppelt ist.

Gemäß verschiedenen Ausführungsformen können die beiden Scharnierelemente 1018ο, 1018m der ersten Scharnieranordnung 418s-1 zumindest abschnittsweise koaxial angeordnet sein. Anschaulich können die erste Abdeckplatte 418p-1 und die zweite Abdeckplatte 418p-2 mittels der ersten Scharnieranordnung 418s-1 (z.B. mittels der beiden Scharnierelemente 1018ο, 1018m) unabhängig voneinander um dieselbe Achse geschwenkt werden.

Gemäß verschiedenen Ausführungsformen kann die erste Abdeckplatte 418p-1 mittels einer sensorischen Steuerung oder Regelung geöffnet werden.

Ferner kann basierend auf der Position der einzelnen Abdeckplatten 418p der Klappenanordnung 418 ein Betriebszustand der Kompaktoranordnung 202 angezeigt werden. Beispielsweise kann ein Öffnen der Klappenanordnung 418 basierend auf einem Füllstand eines Sammelbehälters 152, wie vorangehend beschrieben ist, automatisch gesteuert werden. Beispielsweise kann die Stellung der Klappenanordnung 418 in die erste Offen-Stellung 418b oder die zweite Offen-Stellung 418c geändert werden (z.B. ausgehend von der Geschlossen-Stellung 418a), wenn ein vordefiniertes Ereignis eintritt. Das vordefinierte Ereignis kann beispielsweise das Erreichen eines vordefinierten Füllstandes des Sammelbehälters 152, eine Benutzereingabe, eine Zeit, etc., sein.

Gemäß verschiedenen Ausführungsformen kann das Öffnen und/oder das Schließen der jeweiligen Klappen automatisch erfolgen, z.B. zeitgesteuert, ereignisgesteuert, benutzergesteuert (z.B. basierend auf Gestensteuerung), etc.

Gemäß verschiedenen Ausführungsformen kann die Fixieranordnung 418f derart eingerichtet sein, dass eine Notentriegelung erfolgen kann, z.B. wenn die jeweilige Klappe manuell bewegt wird bzw. wenn eine äußere Kraft auf die jeweilige Klappe wirkt.

**Fig.10B** veranschaulicht die zweite Scharnieranordnung 418s-2 der Klappenanordnung 418, gemäß verschiedenen Ausführungsformen.

Gemäß verschiedenen Ausführungsformen kann die zweite Scharnieranordnung 418s-2 ein erstes Scharnierelement 1028m und ein zweites Scharnierelement 1028u aufweisen, die relativ zueinander geklappt werden können. Dabei kann die zweite Abdeckplatte 418p-2 an dem ersten Scharnierelement 1028m befestigt sein und die dritte Abdeckplatte 418p-3 kann an dem zweiten Scharnierelement 1028u befestigt sein.

Die zweite Scharnieranordnung 418s-2 kann beispielsweise derart eingerichtet sein, dass die beiden Scharnierelemente 1028m, 1028u um ungefähr 180° gegeneinander rotiert (bzw. geschwenkt) werden können. Passend dazu können die zweite Abdeckplatte 418p-2 und die dritte Abdeckplatte 418p-3 ausgestaltet sein.

**Fig.11** veranschaulicht ein schematisches Ablaufdiagramm eines Verfahrens 1100 zum Montieren der Kompaktoranordnung 202, gemäß verschiedenen Ausführungsformen. Das Verfahren kann beispielsweise durchgeführt werden, wie es bezüglich der Figuren 7A bis 7C, der Figuren 8A bis 8C, und/oder der Figuren 9A bis 9C, beschrieben ist. Das Verfahren 1100 kann beispielsweise Folgendes aufweisen: in 1110, Aufstellen des Tragegestells 204a auf einen Untergrund, wobei die Klappenanordnung 418 in der zweiten Offen-Stellung 418c ist; in 1120, Anheben des Tragegestells 204a und Abstützen des Tragegestells 204a auf einer vordefinierten Höhe; und, in 1130, Klappen der Klappenanordnung 418 in die Geschlossen-Stellung 418a.

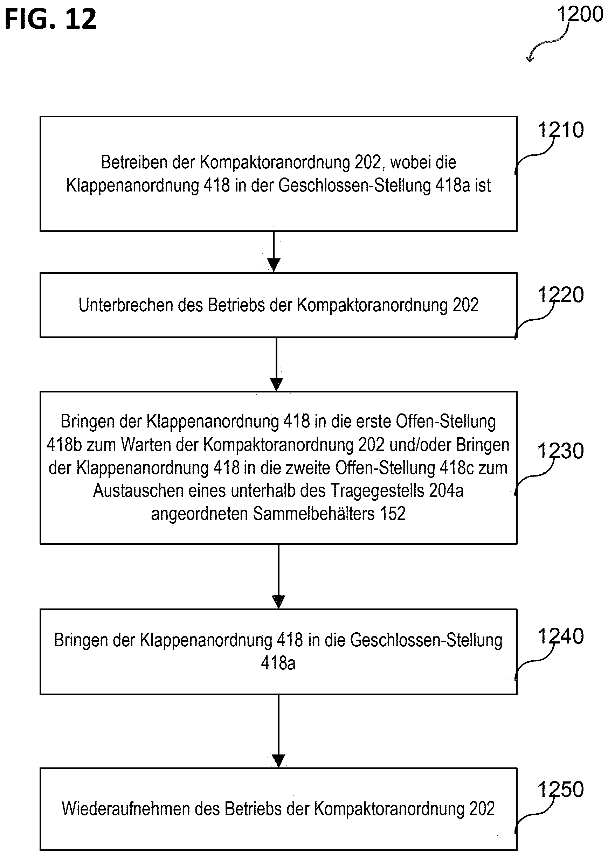

**Fig.12** veranschaulicht ein schematisches Ablaufdiagramm eines Verfahrens 1200 zum Warten der Kompaktoranordnung 202, gemäß verschiedenen Ausführungsformen. Das Verfahren 1200 kann beispielsweise Folgendes aufweisen: in 1210, Betreiben der Kompaktoranordnung 202, wobei die Klappenanordnung 418 in der Geschlossen-Stellung 418a ist; anschließend, in 1220, Unterbrechen des Betriebs der Kompaktoranordnung 202; in 1230, Klappen der Klappenanordnung 418 in die erste Offen-Stellung 418b zum Warten der Kompaktoranordnung 202 und/oder Klappen der Klappenanordnung 418 in die zweite Offen-Stellung 418c zum Austauschen eines unterhalb des Tragegestells 204a angeordneten Sammelbehälters 152; anschließend, in 1140, Klappen der Klappenanordnung 418 in die Geschlossen-Stellung 418a; und, in 1250, Wiederaufnehmen des Betriebs der Kompaktoranordnung 202.

Ein Scharnier kann beispielsweise als ein Gelenk mit zumindest einem oder genau einem Rotationsfreiheitsgrad verstanden werden. Das Scharnier kann zwei Teile beweglich miteinander verbinden. Ein Scharnier kann beispielsweise derart eingerichtet sein, dass die zwei Teile, die drehbar bzw. schwenkbar miteinander verbunden sind, keine translatorische Bewegung relativ zueinander ausführen können. Eine Scharnieranordnung, wie hierin beschrieben ist, kann ein Scharnier (bzw. Gelenk) oder mehrere Scharniere (bzw. mehrere Gelenke) aufweisen.

Eine schwenkbar gelagerte Abdeckplatte kann beispielsweise als Klappe bezeichnet sein oder werden.

Anschaulich können die jeweiligen Stellungen bzw. Schwenkpositionen der einzelnen Klappen der Klappenanordnung 418 verschiedene Stellungen der Klappenanordnung 418 definieren.

## Patentansprüche

1. Kompaktoranordnung (202), aufweisend:
• ein Tragegestell (204a),
• einen Kompaktor (102), der an dem Tragegestell (204a) montiert ist;
• eine Klappenanordnung (418), aufweisend:
eine erste Abdeckplatte (418p-1),
eine zweite Abdeckplatte (418p-2),
eine erste Scharnieranordnung (418s-1) mittels derer die erste Abdeckplatte (418p-1) schwenkbar an dem Tragegestell (204a) montiert ist und mittels derer die zweite Abdeckplatte (418p-2) schwenkbar an dem Tragegestell (204a) montiert ist,
eine dritte Abdeckplatte (418p-3), und
eine zweite Scharnieranordnung (418s-2) mittels derer die dritte Abdeckplatte (418p-3) schwenkbar an der zweiten Abdeckplatte (418p-2) montiert ist,
**dadurch gekennzeichnet, dass**
die Klappenanordnung (418) derart eingerichtet ist, dass diese in eine Geschlossen-Stellung (418a), in eine erste Offen-Stellung (418b) und in eine zweite Offen-Stellung (418c) gebracht werden kann mittels Schwenkens der ersten Abdeckplatte (418p-1), der zweiten Abdeckplatte (418p-2) und/oder der dritten Abdeckplatte (418p-3), wobei, in der ersten Offen-Stellung (418b), die erste Abdeckplatte (418p-1) über der zweiten Abdeckplatte (418p-2) angeordnet ist, sowie die zweite und die dritte Abdeckplatte (418p-3) im Wesentlichen in einer gemeinsamen Ebene ausgerichtet sind; und/oder wobei, in der zweiten Offen-Stellung (418c), die drei Abdeckplatten übereinander angeordnet sind.

2. Kompaktoranordnung (202) gemäß Anspruch 1,
wobei die erste Scharnieranordnung (418s-1) eine erste Schwenkachse definiert, um welche die erste Abdeckplatte (418p-1) und die zweite Abdeckplatte (418p-2) geschwenkt werden können; und
wobei die zweite Scharnieranordnung (418s-2) eine zweite Schwenkachse definiert, um welche die zweite Abdeckplatte (418p-2) und die dritte Abdeckplatte (418p-3) relativ zueinander geschwenkt werden können.

3. Kompaktoranordnung (202) gemäß Anspruch 1 oder 2,
wobei die erste Schwenkachse und die zweite Schwenkachse im Wesentlichen parallel zueinander ausgerichtet sind.

4. Kompaktoranordnung (202) gemäß einem der Ansprüche 1 bis 3,
wobei die erste Scharnieranordnung (418s-1) an einem ersten Endabschnitt der zweiten Abdeckplatte (418p-2) montiert ist und wobei die zweite Scharnieranordnung (418s-2) an einem dem ersten Endanschnitt gegenüberliegenden zweiten Endabschnitt der zweiten Abdeckplatte (418p-2) montiert ist.

5. Kompaktoranordnung (202) gemäß einem der Ansprüche 1 bis 4,
wobei das Tragegestell (204a) einen Bereich aufweist, in welchem der Kompaktor (102) angeordnet ist, und
wobei die erste Abdeckplatte (418p-1) den Bereich, in einer Geschlossen-Stellung (418a), zumindest abschnittsweise abdeckt.

6. Kompaktoranordnung (202) gemäß einem der Ansprüche 1 bis 5, ferner aufweisend:
mehrere Stützbeine (204b) zum Lagern des Tragegestells (204a) auf einer vordefinierten Höhe derart, dass unter dem Tragegestell (204a) ein Aufnahmeraum (304a) zum Aufnehmen eines Sammelbehälters (152) bereitgestellt ist;
wobei, vorzugsweise, die zweite Abdeckplatte (418p-2) und die dritte Abdeckplatte (418p-3) den Aufnahmeraum (304a) zum Aufnehmen eines Sammelbehälters (152), in einer Geschlossen-Stellung (418a), zumindest abschnittsweise abdeckt.

7. Kompaktoranordnung (202) gemäß einem der Ansprüche 1 bis 6,
wobei, in der Geschlossen-Stellung (418a), die erste Abdeckplatte (418p-1), die zweite Abdeckplatte (418p-2), und die dritte Abdeckplatte (418p-3) im Wesentlichen eine geschlossene Fläche bilden; und/oder
wobei, in der Geschlossen-Stellung (418a), die erste Abdeckplatte (418p-1), die zweite Abdeckplatte (418p-2), und die dritte Abdeckplatte (418p-3) im Wesentlichen in einer gemeinsamen Ebene ausgerichtet sind.

8. Kompaktoranordnung (202) gemäß einem der Ansprüche 1 bis 7, ferner aufweisend:
eine Fixieranordnung (418f) zum Fixieren der ersten Abdeckplatte (418p-1) in der Geschlossen-Stellung (418a) und/oder zum Fixieren der zweiten und der dritten Abdeckplatte (418p-3) in der zweiten Offen-Stellung (418c).

9. Kompaktoranordnung (202) gemäß einem der Ansprüche 1 bis 8,
wobei die Klappenanordnung (418) derart eingerichtet ist, dass diese von der Geschlossen-Stellung (418a) in die erste Offen-Stellung (418b) gebracht wird mittels Schwenkens der ersten Abdeckplatte (418p-1) um ungefähr 180°; und/oder wobei die Klappenanordnung (418) derart eingerichtet ist, dass diese von der Geschlossen-Stellung (418a) in die zweite Offen-Stellung (418c) gebracht wird mittels Schwenkens der zweiten Abdeckplatte (418p-2) um ungefähr 180° bezüglich der ersten Abdeckplatte (418p-1) und mittels Schwenkens der dritten Abdeckplatte (418p-3) um ungefähr 180° bezüglich der zweiten Abdeckplatte (418p-2).

10. Kompaktoranordnung (202) gemäß Anspruch 9,
wobei die Klappenanordnung (418) derart eingerichtet ist, dass das Schwenken der zweiten Abdeckplatte (418p-2) mittels der ersten Scharnieranordnung (418s-1) und das Schwenken der dritten Abdeckplatte (418p-3) mittels der zweiten Scharnieranordnung (418s-2) einander entgegengesetzt erfolgt.

11. Kompaktoreinrichtung (300), aufweisend:
mehrere Kompaktoranordnungen (202) gemäß einem der Ansprüche 1 bis 10,
wobei die Kompaktoranordnungen (202) derart relativ zueinander angeordnet sind,
dass Behälter entlang eines Transportwegs durch die Kompaktoranordnungen (202) hindurch transportiert werden können.

12. Verfahren zum Montieren einer Kompaktoranordnung (202) gemäß einem der Ansprüche 1 bis 10, das Verfahren aufweisend:
• Aufstellen des Tragegestells (204a) auf einen Untergrund, wobei die Klappenanordnung (418) in der zweiten Offen-Stellung (418c) ist;
• Anheben des Tragegestells (204a) auf eine vordefinierte Höhe und Abstützen des Tragegestells (204a) in der vordefinierten Höhe; und
• Bringen der Klappenanordnung (418) in die Geschlossen-Stellung (418a) mittels Schwenkens der zweiten Abdeckplatte (418p-2) und der dritten Abdeckplatte (418p-3).

13. Verfahren zum Warten einer Kompaktoranordnung (202) gemäß einem der Ansprüche 1 bis 10, das Verfahren aufweisend:
• Betreiben der Kompaktoranordnung (202), wobei die Klappenanordnung (418) in der Geschlossen-Stellung (418a) ist; anschließend,
• Unterbrechen des Betriebs der Kompaktoranordnung (202);
• Bringen der Klappenanordnung (418) in die erste Offen-Stellung (418b) zum Warten der Kompaktoranordnung (202) mittels Schwenkens der ersten Abdeckplatte (418p-1) und/oder
• Bringen der Klappenanordnung (418) in die zweite Offen-Stellung (418c) zum Austauschen eines unterhalb des Tragegestells (204a) angeordneten Sammelbehälters (152) mittels Schwenkens der zweiten Abdeckplatte (418p-2) und der dritten Abdeckplatte (418p-3); anschließend,
• Bringen der Klappenanordnung (418) in die Geschlossen-Stellung (418a); und
• Wiederaufnehmen des Betriebs der Kompaktoranordnung (202).

## Claims

1. Compactor arrangement (202), having:
• a support framework (204a),
• a compactor (102) which is installed on the support framework (204a);
• a flap arrangement (418), having:
a first cover plate (418p-1),
a second cover plate (418p-2),
a first hinge arrangement (418s-1), by means of which the first cover plate (418p-1) is pivotably installed on the support framework (204a) and by means of which the second cover plate (418p-2) is pivotably installed on the support framework (204a),
a third cover plate (418p-3), and
a second hinge arrangement (418s-2), by means of which the third cover plate (418p-3) is pivotably installed on the second cover plate (418p-2),
**characterized in that**
the flap arrangement (418) is configured in such a way that it can be brought into a closed position (418a), into a first open position (418b) and into a second open position (418c) by means of pivoting of the first cover plate (418p-1), of the second cover plate (418p-2) and/or of the third cover plate (418p-3), wherein, in the first open position (418b), the first cover plate (418p-1) is arranged over the second cover plate (418p-2) and also the second cover plate and the third cover plate (418p-3) are oriented so as to be substantially in a common plane; and/or wherein, in the second open position (418c), the three cover plates are arranged one over the other.

2. Compactor arrangement (202) according to Claim 1, wherein the first hinge arrangement (418s-1) defines a first pivot axis about which the first cover plate (418p-1) and the second cover plate (418p-2) can be pivoted; and
wherein the second hinge arrangement (418s-2) defines a second pivot axis about which the second cover plate (418p-2) and the third cover plate (418p-3) can be pivoted relative to one another.

3. Compactor arrangement (202) according to Claim 1 or 2,
wherein the first pivot axis and the second pivot axis are oriented so as to be substantially parallel to one another.

4. Compactor arrangement (202) according to one of Claims 1 to 3,
wherein the first hinge arrangement (418s-1) is installed on a first end portion of the second cover plate (418p-2), and wherein the second hinge arrangement (418s-2) is installed on a second end portion of the second cover plate (418p-2) which is situated opposite the first end portion.

5. Compactor arrangement (202) according to one of Claims 1 to 4,
wherein the support framework (204a) has a region in which the compactor (102) is arranged, and wherein, in a closed position (418a), the first cover plate (418p-1) at least sectionally covers the region.

6. Compactor arrangement (202) according to one of Claims 1 to 5, furthermore having:
multiple support legs (204b) for mounting the support framework (204a) at a predefined height in such a way that a receiving space (304a) for receiving a collecting container (152) is provided below the support framework (204a);
wherein preferably, in a closed position (418a), the second cover plate (418p-2) and the third cover plate (418p-3) at least sectionally cover the receiving space (304a) for receiving a collecting container (152).

7. Compactor arrangement (202) according to one of Claims 1 to 6,
wherein, in the closed position (418a), the first cover plate (418p-1), the second cover plate (418p-2) and the third cover plate (418p-3) substantially form a closed surface; and/or
wherein, in the closed position (418a), the first cover plate (418p-1), the second cover plate (418p-2) and the third cover plate (418p-3) are oriented so as to be substantially in a common plane.

8. Compactor arrangement (202) according to one of Claims 1 to 7, furthermore having:
a fixing arrangement (418f) for fixing the first cover plate (418p-1) in the closed position (418a) and/or for fixing the second cover plate and the third cover plate (418p-3) in the second open position (418c).

9. Compactor arrangement (202) according to one of Claims 1 to 8,
wherein the flap arrangement (418) is configured in such a way that it is brought from the closed position (418a) into the first open position (418b) by means of pivoting of the first cover plate (418p-1) through approximately 180°; and/or wherein the flap arrangement (418) is configured in such a way that it is brought from the closed position (418a) into the second open position (418c) by means of pivoting of the second cover plate (418p-2) through approximately 180° in relation to the first cover plate (418p-1) and by means of pivoting of the third cover plate (418p-3) through approximately 180° in relation to the second cover plate (418p-2).

10. Compactor arrangement (202) according to Claim 9, wherein the flap arrangement (418) is configured in such a way that the pivoting of the second cover plate (418p-2) by means of the first hinge arrangement (418s-1) and the pivoting of the third cover plate (418p-3) by means of the second hinge arrangement (418s-2) are realized oppositely with respect to one another.

11. Compactor device (300), having:
multiple compactor arrangements (202) according to one of Claims 1 to 10, wherein the compactor arrangements (202) are arranged relative to one another in such a way that containers can be transported along a transport path through the compactor arrangements (202).

12. Method for installing a compactor arrangement (202) according to one of Claims 1 to 10, the method comprising:
• setting up the support framework (204a) on an underlying surface, wherein the flap arrangement (418) is in the second open position (418c);
• raising the support framework (204a) to a predefined height and supporting the support framework (204a) at the predefined height; and
• bringing the flap arrangement (418) into the closed position (418a) by means of pivoting of the second cover plate (418p-2) and of the third cover plate (418p-3).

13. Method for servicing a compact arrangement (202) according to one of Claims 1 to 10, the method comprising:
• operating the compactor arrangement (202), wherein the flap arrangement (418) is in the closed position (418a); then
• interrupting the operation of the compactor arrangement (202);
• bringing the flap arrangement (418) into the first open position (418b), for servicing the compactor arrangement (202), by means of pivoting of the first cover plate (418p-1), and/or
• bringing the flap arrangement (418) into the second open position (418c), for exchanging a collecting container (152) arranged below the support framework (204a), by means of pivoting of the second cover plate (418p-2) and of the third cover plate (418p-3); then
• bringing the flap arrangement (418) into the closed position (418a); and
• recommencing the operation of the compactor arrangement (202).

## Revendications

1. Agencement de compacteur (202), comprenant :
- un châssis porteur (204a),
- un compacteur (102), qui est monté sur le châssis porteur (204a) ;
- un agencement de volet (418), comprenant :
une première plaque de recouvrement (418p-1),
une deuxième plaque de recouvrement (418p-2),
un premier agencement de charnière (418s-1) au moyen duquel la première plaque de recouvrement (418p-1) est montée de manière pivotante sur le châssis porteur (204a) et au moyen duquel la deuxième plaque de recouvrement (418p-2) est montée de manière pivotante sur le châssis porteur (204a),
un troisième panneau de recouvrement (418p-3), et
un deuxième agencement de charnière (418s-2) au moyen duquel le troisième panneau de recouvrement (418p-3) est monté de manière pivotante sur le deuxième panneau de recouvrement (418p-2),
**caractérisé en ce que**
l'agencement de volets (418) est conçu de telle sorte que celui-ci peut être amené dans une position fermée (418a), dans une première position ouverte (418b) et dans une deuxième position ouverte (418c) au moyen d'un pivotement de la première plaque de recouvrement (418p-1), de la deuxième plaque de recouvrement (418p-2) et/ou de la troisième plaque de recouvrement (418p-3) ; dans la première position ouverte (418b), la première plaque de recouvrement (418p-1) étant agencée au-dessus de la deuxième plaque de recouvrement (418p-2), et la deuxième et la troisième plaque de recouvrement (418p-3) étant orientées essentiellement dans un plan commun ; et/ou, dans la deuxième position ouverte (418c), les trois plaques de recouvrement étant agencées les unes au-dessus des autres.

2. Agencement de compacteur (202) selon la revendication 1,
dans lequel le premier agencement de charnière (418s-1) définit un premier axe de pivotement autour duquel la première plaque de recouvrement (418p-l) et la deuxième plaque de recouvrement (418p-2) peuvent pivoter ; et dans lequel le deuxième agencement de charnière (418s-2) définit un deuxième axe de pivotement autour duquel la deuxième plaque de recouvrement (418p-2) et la troisième plaque de recouvrement (418p-3) peuvent pivoter l'une par rapport à l'autre.

3. Agencement de compacteur (202) selon la revendication 1 ou 2,
dans lequel le premier axe de pivotement et le deuxième axe de pivotement sont orientés essentiellement parallèlement l'un à l'autre.

4. Agencement de compacteur (202) selon l'une quelconque des revendications 1 à 3,
dans lequel le premier agencement de charnière (418s-1) est monté sur une première section d'extrémité de la deuxième plaque de recouvrement (418p-2) et dans lequel le deuxième agencement de charnière (418s-2) est monté sur une deuxième section d'extrémité de la deuxième plaque de recouvrement (418p-2), opposée à la première section d'extrémité.

5. Agencement de compacteur (202) selon l'une quelconque des revendications 1 à 4,
dans lequel le châssis porteur (204a) présente une zone dans laquelle le compacteur (102) est agencé, et
dans lequel la première plaque de recouvrement (418p-1) recouvre au moins par sections la zone dans une position fermée (418a).

6. Agencement de compacteur (202) selon l'une quelconque des revendications 1 à 5, comprenant en outre :
plusieurs pieds d'appui (204b) pour le support du châssis porteur (204a) à une hauteur prédéfinie de telle sorte qu'un espace de réception (304a) est fourni sous le châssis porteur (204a) pour recevoir un contenant de collecte (152) ;
dans lequel, de préférence, la deuxième plaque de recouvrement (418p-2) et la troisième plaque de recouvrement (418p-3) recouvrent au moins par sections l'espace de réception (304a) pour recevoir un contenant de collecte (152), dans une position fermée (418a).

7. Agencement de compacteur (202) selon l'une quelconque des revendications 1 à 6,
dans lequel, dans la position fermée (418a), la première plaque de recouvrement (418p-1), la deuxième plaque de recouvrement (418p-2) et la troisième plaque de recouvrement (418p-3) forment essentiellement une surface fermée ; et/ou
dans lequel, dans la position fermée (418a), la première plaque de recouvrement (418p-l), la deuxième plaque de recouvrement (418p-2) et la troisième plaque de recouvrement (418p-3) sont orientées essentiellement dans un plan commun.

8. Agencement de compacteur (202) selon l'une quelconque des revendications 1 à 7, comprenant en outre :
un agencement de fixation (418f) pour fixer la première plaque de recouvrement (418p-l) dans la position fermée (418a) et/ou pour fixer la deuxième et la troisième plaque de recouvrement (418p-3) dans la deuxième position ouverte (418c).

9. Agencement de compacteur (202) selon l'une quelconque des revendications 1 à 8,
dans lequel l'agencement de volet (418) est conçu de telle sorte que celui-ci est amené de la position fermée (418a) à la première position ouverte (418b) au moyen d'un pivotement de la première plaque de recouvrement (418p-l) d'environ 180° ; et/ou
dans lequel l'agencement de volet (418) est conçu de telle sorte que celui-ci est amené de la position fermée (418a) à la deuxième position ouverte (418c) au moyen d'un pivotement de la deuxième plaque de recouvrement (418p-2) d'environ 180° par rapport à la première plaque de recouvrement (418p-1) et au moyen d'un pivotement de la troisième plaque de recouvrement (418p-3) d'environ 180° par rapport à la deuxième plaque de recouvrement (418p-2).

10. Agencement de compacteur (202) selon la revendication 9,
dans lequel l'agencement de volet (418) est conçu de telle sorte que le pivotement de la deuxième plaque de recouvrement (418p-2) au moyen du premier agencement de charnière (418s-1) et le pivotement de la troisième plaque de recouvrement (418p-3) au moyen du deuxième agencement de charnière (418s-2) sont effectués de manière opposée l'un à l'autre.

11. Dispositif compacteur (300), comprenant :
plusieurs agencements de compacteur (202) selon l'une quelconque des revendications 1 à 10,
dans lequel les agencements de compacteurs (202) sont agencés les uns par rapport aux autres de telle sorte que des contenants peuvent être transportés le long d'un trajet de transport à travers les agencements de compacteur (202).

12. Procédé de montage d'un agencement de compacteur (202) selon l'une quelconque des revendications 1 à 10, le procédé comprenant :
- la disposition du châssis porteur (204a) sur un sol, l'agencement de volet (418) étant dans la deuxième position ouverte (418c) ;
- le soulèvement du châssis porteur (204a) à une hauteur prédéfinie et le support du châssis porteur (204a) à la hauteur prédéfinie ; et
- l'amenée de l'agencement de volet (418) dans la position fermée (418a) au moyen d'un pivotement de la deuxième plaque de recouvrement (418p-2) et de la troisième plaque de recouvrement (418p-3).

13. Procédé d'entretien d'un agencement de compacteur (202) selon l'une quelconque des revendications 1 à 10, le procédé comprenant :
- l'exploitation de l'agencement de compacteur (202), l'agencement de volet (418) étant dans la position fermée (418a) ; puis,
- l'interruption de l'exploitation de l'agencement de compacteur (202) ;
- l'amenée de l'agencement de volet (418) dans la première position ouverte (418b) pour l'entretien de l'agencement de compacteur (202) au moyen d'un pivotement de la première plaque de recouvrement (418p-1) et/ou
- l'amenée de l'agencement de volet (418) dans la deuxième position ouverte (418c) pour le remplacement d'un contenant de collecte (152) agencé sous le châssis porteur (204a) au moyen d'un pivotement de la deuxième plaque de recouvrement (418p-2) et de la troisième plaque de recouvrement (418p-3) ; puis,
- l'amenée de l'agencement de volet (418) dans la position fermée (418a) ; et
- la reprise de l'exploitation de l'agencement de compacteur (202).
